# EUROPEAN PATENT APPLICATION

(11) **EP 1 501 316 A1**
(43) Date of publication of application: **26.01.2005**
(21) Application number: 03725674.0
(22) Date of filing: 24.04.2003
(51) Int. Cl.: H04N 13/00, G09G 5/36, G09G 5/00, G06T 17/40, G09G 5/24

(54) **MULTIMEDIA INFORMATION GENERATION METHOD AND MULTIMEDIA INFORMATION REPRODUCTION DEVICE**

(30) Priority: 25.04.2002 JP 2002124671; 30.09.2002 JP 2002286098; 01.11.2002 JP 2002319984; 14.02.2003 JP 2003037152
(71) Applicant: Sharp Kabushiki Kaisha, Osaka-shi, Osaka 545-8522 (JP)
(72) Inventor: ITO, Norio, Chiba-shi, Chiba 266-0031 (JP); INOUE, Satoru, Higashimatsuyama-shi, Saitama 355-0007 (JP); KATATA, Hiroyuki, Chiba-shi, Chiba 266-0005 (JP); NOMURA, Toshio, Hachioji-shi, Tokyo 193-0944 (JP); UCHIUMI, Tadashi, Urayasu-shi, Chiba 279-0003 (JP); AONO, Tomoko, Chiba-shi, Chiba 262-0033 (JP); YABE, Hiroaki, Matsudo-shi, Chiba 270-0014 (JP)
(74) Representative: Brown, Kenneth Richard
(86) International application number: PCT/JP2003/005314
(87) International publication number: WO 2003/092303

(57) **Abstract**

To a multimedia information file including three-dimensional image data, three-dimensional display control information (2) is added that indicates an intended three-dimensional display method for the three-dimensional image data or a data format in which the data is recorded. A three-dimensional image reproduction apparatus performs conversion appropriate for data characteristics derived from the three-dimensional display control information (2) and then provides display. Recorded three-dimensional image data (3) is thus given versatility so that the same three-dimensional image data can be used commonly to different three-dimensional display schemes.

## Description

### Technical Field

The present invention relates to a method of generating multimedia information adding attribute information to image data when image data for three-dimensional display is generated in a file, and to a multimedia information reproduction apparatus reproducing such data.

### Background Art

A variety of methods of displaying a three-dimensional image have conventionally been proposed. Among those methods, a "two-viewpoint system" utilizing binocular parallax has commonly been used. That is, stereoscopic vision is obtained by preparing an image for left eye and an image for right eye having binocular parallax therebetween and projecting the respective images to right and left eyes independently.

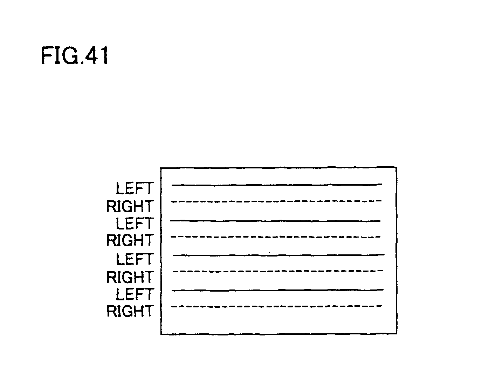

Fig. 41 is a conceptual illustration of a "time-division scheme" which is one representative of the two-viewpoint system.

In the time-division scheme, the image for left eye and the image for right eye are alternately arranged in a top-to-bottom direction as shown in Fig. 41, and a field displaying the image for left eye and a field displaying the image for right eye are alternately switched for display. Here, vertical resolution of the image for left eye and the image for right eye is half the vertical resolution in normal two-dimensional display. An observer wears shutter-type glasses in which a shutter opens and shuts in synchronization with a switching cycle of the display. As to the shutter used herein, the left eye side opens and the right eye side shuts while the image for left eye is displayed, whereas the left eye side shuts and the right eye side opens while the image for right eye is displayed. In this manner, the image for left eye is observed only with the left eye and the image for right eye is observed only with the right eye, thereby obtaining stereoscopic vision.

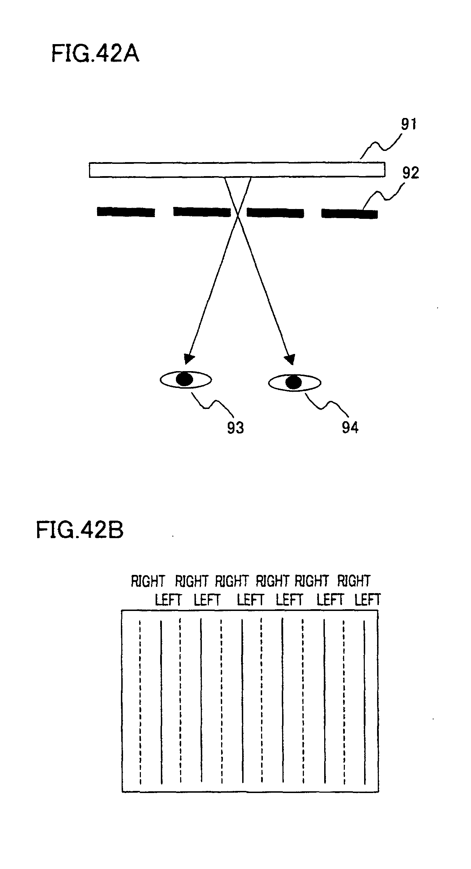

Figs. 42A and 42B are conceptual illustrations of a "parallax barrier scheme" which is another representative of the two-viewpoint system.

Fig. 42A shows a principle to produce parallax, while Fig. 42B shows a screen displayed in accordance with the parallax barrier scheme.

An image including a pair of respective images for left eye and for right eye aligned in stripes as shown in Fig. 42B is displayed on an image display panel 91 as shown in Fig. 42A. Then, what is called a parallax barrier 92 having slits at intervals corresponding to the images is placed in front of the image display panel. Here, stereoscopic vision is obtained by observing the image for left eye only with left eye 93 and the image for right eye only with right eye 94.

Japanese Patent Laying-Open No. 11-41627 discloses one example of a data recording format used for three-dimensional display in accordance with a lenticular scheme based on a principle the same as that of the parallax barrier scheme.

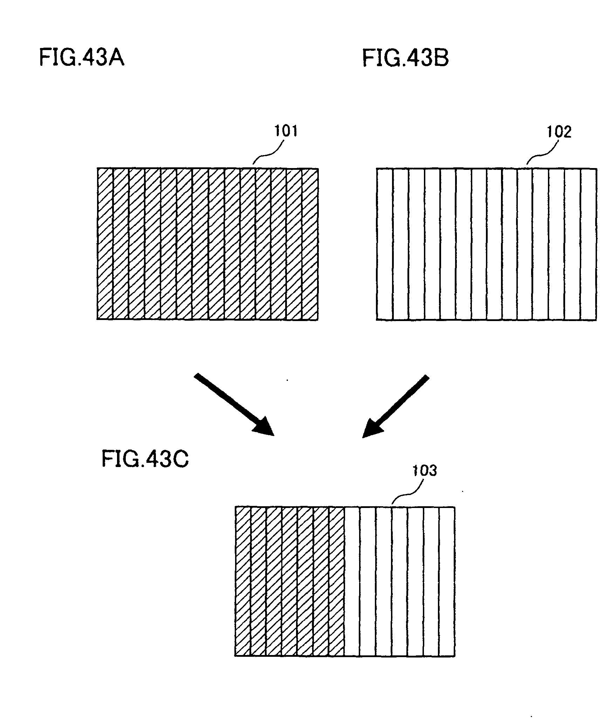

Figs. 43A to 43C are conceptual illustrations showing one example of such a data recording format in accordance with the "lenticular scheme."

Specifically, images for left eye 101 shown in Fig. 43A and images for right eye 102 shown in Fig. 43B are thinned respectively so as to prepare one mixed image 103 shown in Fig. 43 C for recording. In reproduction, mixed image 103 is re-arranged so as to create a combined image as shown in Fig. 42B.

In addition to the example of the two-viewpoint system described above, there are various methods for displaying a three-dimensional image. Here, however, recorded data generally lacks compatibility among different display schemes.

For example, the data recorded so as to adapt to the time-division scheme cannot be displayed as it is on a three-dimensional display adapted to the parallax barrier scheme. Therefore, in a conventional three-dimensional display system, data is recorded on the assumption that a display method is initially fixed, without taking into account versatility of the recorded data. For example, if it is decided that a three-dimensional display adapted to the parallax barrier scheme is used, data intended to be shown on that display is recorded on a recording medium. Here, as a possibility of being shown on a display adapted to another scheme is not considered, information that the recorded data is available for the parallax barrier scheme is not recorded on a file.

There are various types of information necessary for three-dimensional display, such as the number of viewpoints or a method of thinning, in addition to the display scheme. Such information, however, is not recorded on the file either because the display scheme has been fixed to one. In other words, if the same scheme is always used, such information does not have to be recorded. On the other hand, this fact remarkably impairs versatility of the recorded data. For example, as far as data adapted to the parallax barrier scheme (or the lenticular scheme) is recorded, the image for left eye and the image for right eye can be recorded as separate sequences, or alternatively, a mixed image in which the image for left eye and the image for right eye are arranged side by side so as to each occupy half an area of the screen as shown in Fig. 43C can be recorded. Alternatively, a combined image in which a pair of the image for left eye and the image for right eye are aligned in stripes as shown in Fig. 42B can be recorded. If a recording format is different, a processing method for subsequent display will naturally be different. It is impossible, however, to know in which format the data has been recorded, from the recorded data. Therefore, when a third party obtains the data, he/she does not know what kind of processing should be adopted for displaying the data.

### Disclosure of the Invention

An object of the present invention is to provide a multimedia information generation method with versatility given to image data for producing a three-dimensional display.

Another object of the present invention is to provide a multimedia information reproduction apparatus for reproducing multimedia information with versatility given to image data for producing a three-dimensional display.

With the purpose of achieving the above-described object, according to an aspect of the present invention, a multimedia information generation method is a method for generating multimedia information including a plurality of two-dimensional images and/or three-dimensional images. When the multimedia information includes three-dimensional image data, the multimedia information includes control information for controlling display of the three-dimensional images.

According to another aspect of the present invention, a multimedia information generation method is a method for generating multimedia information comprised of a plurality of modules including a plurality of two-dimensional images and/or three-dimensional images. When the modules include three-dimensional image data, the modules include control information for controlling display of the three-dimensional images.

Preferably, the control information is provided correspondingly to each three-dimensional image.

Preferably, the control information is provided correspondingly to a plurality of three-dimensional images.

Preferably, an identifier for identifying each of at least the two-dimensional images and/or the three-dimensional images is set in advance, and the control information includes identification information indicating the identifier of the three-dimensional image.

Preferably, an identifier for identifying each of at least the two-dimensional images and/or the three-dimensional images is set in advance, and the control information includes identification information indicating the identifier of the three-dimensional image.

Preferably, the control information includes a plurality of identifiers.

Preferably, a predetermined value of the identifier indicates that all of images included in the multimedia information are three-dimensional images.

Preferably, a predetermined value of the identifier indicates that all of images included in the modules are three-dimensional images.

According to the present invention, even when one multimedia information file includes a plurality of pieces of two-dimensional image data and three-dimensional image data, this one type of multimedia information file can address flexibly to various three-dimensional display schemes since three-dimensional image display control information for displaying the three-dimensional image data is recorded or structured as the multimedia information file together with the three-dimensional image data so that the three-dimensional image data is given versatility.

According to still another aspect of the present invention, a multimedia information reproduction apparatus reproducing multimedia information including a plurality of two-dimensional images or three-dimensional images includes a generation unit generating a three-dimensional image from the two-dimensional images, and a first synthesis unit synthesizing the three-dimensional image generated by the generation unit and the three-dimensional images included in the multimedia information.

Preferably, the multimedia information reproduction apparatus further includes a second synthesis unit synthesizing a plurality of two-dimensional images, and the generation unit generates three-dimensional image data from two-dimensional image data obtained through synthesis by the second synthesis unit.

According to the present invention, even when one multimedia information file includes a plurality of pieces of two-dimensional image data and three-dimensional image data, three-dimensional image display control information included in the multimedia information file can be analyzed to appropriately convert the three-dimensional image data and the two-dimensional image data according to a display method and thereby correctly display them.

Further, with the purpose of achieving the above-described object, according to a further aspect of the present invention, a multimedia information reproduction apparatus reproducing multimedia information including a plurality of two-dimensional images and/or three-dimensional images includes a page data decoding unit decoding graphic and character information included in the multimedia information to obtain a page image, a 2D/3D conversion unit converting the page image into a three-dimensional image, and a first synthesis unit synthesizing the three-dimensional image generated by the 2D/3D conversion unit and the three-dimensional images included in the multimedia information.

Preferably, the apparatus further includes a second synthesis unit synthesizing a plurality of two-dimensional images, and the 2D/3D conversion unit converts two-dimensional image data obtained through synthesis by the second synthesis unit into three-dimensional image data.

Preferably, a first font image and a second font image corresponding to the character information are provided, the first font image is used when the character information is three-dimensionally displayed and the second font image is used when the character information is two-dimensionally displayed.

Preferably, the page data decoding unit uses the first or second font image to obtain the page image.

Preferably, the 2D/3D conversion unit uses the first or second font image to obtain the three-dimensional image.

Preferably, the apparatus further includes a font image storage unit storing the first font image and the second font image and a switch selecting the first font image or the second font image.

Preferably, the apparatus further includes a font conversion unit converting the second font image into the first font image.

Preferably, the first font image is comprised of a plurality of pieces of light/dark information and arranged so that apparent character thickness is thin.

With the multimedia information reproduction apparatus of the present invention, even when one multimedia information file includes a plurality of pieces of two-dimensional image data and three-dimensional image data, three-dimensional image display control information included in the multimedia information file can be analyzed to appropriately convert the three-dimensional image data and the two-dimensional image data according to a display method and thereby correctly display them.

### Brief Description of the Drawings

Figs. 1 A to 1C show a structure of a multimedia information file generated according to an embodiment of the present invention. Fig. 1A shows elements of the multimedia information file, Fig. 1B shows elements of each object and Fig. 1C shows an exemplary structure of three-dimensional image data.
Fig. 2 is a block diagram showing a configuration of an image data recording apparatus 100 according to the embodiment.
Fig. 3 is a block diagram illustrating a configuration of an image data reproduction apparatus 200.
Figs. 4A to 4C are conceptual illustrations of specific information described in three-dimensional display control information 2. Fig. 4A shows specific information described in three-dimensional display control information 2, Fig. 4B shows respective streams for audio, an image for left eye and an image for right eye and Fig. 4C shows a table for identifying the direction of thinning.
Figs. 5A to 5C are conceptual illustrations of "number of viewpoints" and "viewpoint position". Fig. 5A shows an example of the two-viewpoint system and Figs. 5B and 5C show respective examples of six-viewpoint system.
Fig. 6 is a conceptual illustration of an exemplary manner of describing correspondence between viewpoint positions and streams in the six-viewpoint system.
Fig. 7A is a conceptual illustration of an exemplary manner of describing correspondence between viewpoint positions and a stream in a case where images for left eye and right eye are in the same stream, and Fig. 7B shows multiplexed data.
Figs. 8A to 8C are conceptual illustrations of other examples of "camera arrangement". Figs. 8A and 8B show examples of convergent arrangement and Fig. 8C shows an example of divergent arrangement.
Figs. 9A and 9B are conceptual illustrations of a structure of a border image. Fig. 9A shows a state where no border image is displayed and Fig. 9B shows a state where a border image is displayed.
Figs. 10A to 10C are each a block diagram illustrating a configuration for providing "boarder image data" to display a border image.
Figs. 11A to 11D are conceptual illustrations of positional relations between a liquid-crystal panel and slits of a parallax barrier employed in the parallax barrier scheme.
Figs. 12A and 12B are conceptual illustrations of sampling pattern.
Figs. 13A to 13E are conceptual illustrations of image arrangement for arranging a plurality of parallax images into one image.
Figs. 14A and 14B are conceptual illustrations of reversal of parallax images each.
Fig. 15 shows a case where a versatile ID is used as the object ID of a three-dimensional image control information object.
Fig. 16 shows three-dimension identification information.
Fig. 17 is a block diagram showing a first modification of the image data reproduction apparatus.
Fig. 18 shows three-dimension identification information inserted regularly to broadcast contents in the form of program sequence information.
Fig. 19 shows a structure of a multimedia information file.
Fig. 20 is a block diagram showing a second modification of the image data reproduction apparatus.
Fig. 21 is a block diagram showing a third modification of the image data reproduction apparatus.
Figs. 22A and 22B are conceptual illustrations of three-dimensional display control information and image data having an image for left eye and an image for right eye arranged side by side.
Fig. 23 is a conceptual illustration of a multimedia information file including both of two-dimensional image data and three-dimensional image data.
Fig. 24 is a conceptual illustration of a state in which a two-dimensional image (2D image) and a three-dimensional image (3D image) are arranged on a screen with respect to the origin of the screen.
Fig. 25 is a conceptual illustration of another structure of the multimedia information file.
Figs. 26A and 26B are conceptual illustrations of further structures of the multimedia information file.
Fig. 27 is a schematic block diagram illustrating a structure of an image data reproduction apparatus used in such an application where one multimedia information file includes three-dimensional image data, two-dimensional image data and information about the arrangement thereof.
Fig. 28 is a conceptual illustration of an operation of a 2D/3D conversion unit 54.
Figs. 29A and 29B are conceptual illustrations of the way in which the arrangement information is used when three-dimensional image data is synthesized.
Fig. 30 is a block diagram showing another configuration of the image data recording apparatus 100 in the present embodiment.
Fig. 31 is a conceptual illustration of a further structure of the multimedia information file.
Fig. 32 is a flowchart illustrating the flow of operation of the image data recording apparatus 100 shown in Fig. 30.
Figs. 33A to 33C are each a detailed block diagram of a page data decoding unit in the present embodiment.
Fig. 34 is a detailed block diagram of the 2D/3D conversion unit of the present embodiment.
Fig. 35 is a conceptual illustration of 2D/3D conversion of a font image.
Fig. 36 shows an exemplary relation between the thickness and the brightness of font.
Figs. 37A to 37C illustrate states of pixels adjacent to each other and exemplary states after conversion.
Figs. 38A and 38B are conceptual illustrations of paste of a font image in one embodiment.
Figs. 39A to 39C are conceptual illustrations of paste of a font image in one embodiment.
Fig. 40 is a conceptual illustration of a procedure of generating a 3D font.
Fig. 41 is a conceptual illustration of a "time-division scheme" which is one representative of the two-viewpoint system.
Figs. 42A and 42B are conceptual illustrations of a "parallax barrier scheme" which is another representative of the two-viewpoint system.
Figs. 43A to 43C are conceptual illustrations showing one example of a data recording format in accordance with a "lenticular scheme."

### Best Modes for Carrying Out the Invention

The structure, operation and effect of the present invention are hereinafter described with reference to the drawings. It is noted that the same or like components in the drawings are denoted by the same reference characters and a description thereof is not repeated.

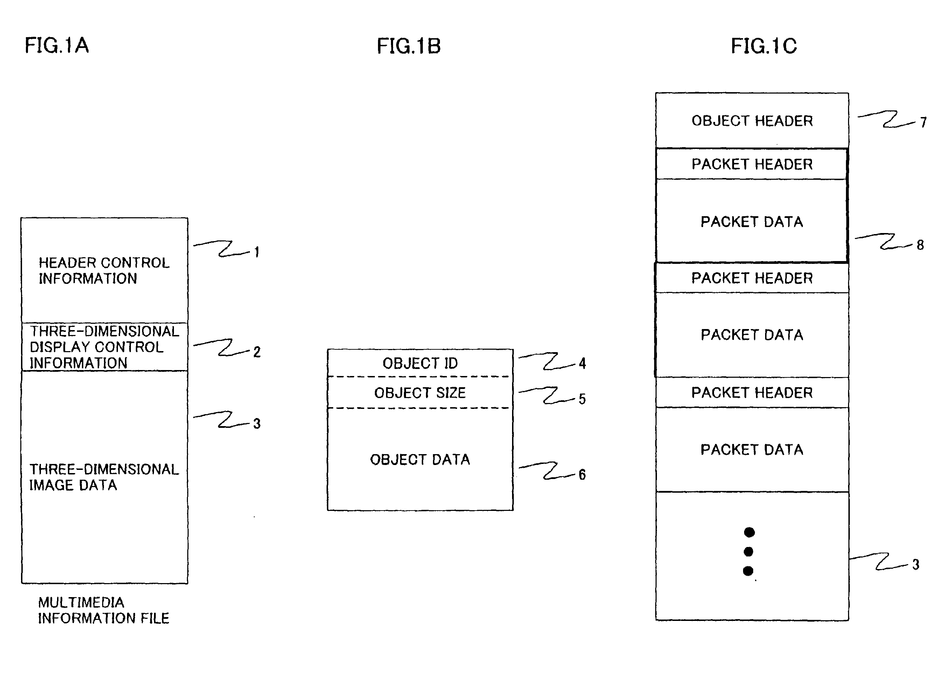

Figs. 1 A to 1 C show a structure of a multimedia information file generated according to an embodiment of the present invention.

The multimedia information file may include any one of three-dimensional image data and two-dimensional image data. The following description is given of an exemplary multimedia information file including three-dimensional image data.

Referring to Fig. 1A, the multimedia information file includes at least three elements: header control information 1, three-dimensional display control information 2 and three-dimensional image data 3.

Header control information 1 is such control information as image size that is necessary for reproducing three-dimensional image data 3. Three-dimensional display control information 2 is control information necessary for converting an obtained three-dimensional image into a desired three-dimensional form. Three-dimensional image data 3 is three-dimensional image data itself.

Three-dimensional image data 3 may be any of still-image data and moving-image data. While audio data may be recorded in the multimedia information file together with the image data, the audio data is not included here for the purpose of simplification. Additional information may also be included.

It is noted that when a multimedia information file includes two-dimensional image data, no three-dimensional display control information is added thereto.

The elements are each called object. Each object takes the form as shown in Fig. 1B. Specifically, an object ID 4 for identifying the object and an object size 5 are written first that are followed by object data 6 with its length defined by object size 5. Object ID 4 and object size 5 are together called object header. The object may have a hierarchical structure.

While header control information 1, three-dimensional display control information 2 and three-dimensional image data 3 should strictly be referred to as header control information object 1, three-dimensional display control information object 2 and three-dimensional image data object 3 respectively, they are called here without the term "object" for avoiding lengthy names.

Fig. 1 C shows an exemplary structure of three-dimensional image data 3. In three-dimensional image data 3, an object header 7 including an object ID and an object size is followed by a plurality of packets 8. Packet 8 is a minimum unit used in communicating data and each packet is comprised of a packet header and packet data. It is noted that three-dimensional image data 3 is not necessarily in the packet form and may be in the form of a series of data strings.

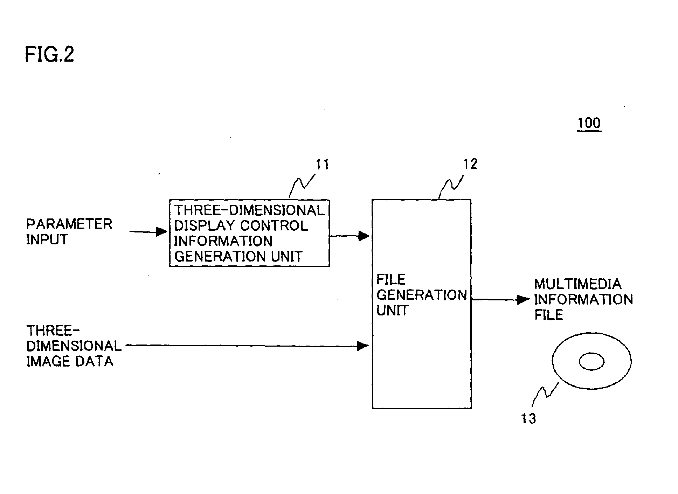

Fig. 2 is a block diagram showing a configuration of an image data recording apparatus 100 that is an example of a multimedia information generation apparatus of the present invention.

Referring to Fig. 2, image data recording apparatus 100 includes a three-dimensional display control information generation unit 11 and a file generation unit 12.

Three-dimensional display control information generation unit 11 receives necessary parameters that are externally provided and generates three-dimensional display control information as one object. File generation unit 12 receives the three-dimensional display control information and three-dimensional image data and adds header control information thereto to generate and output the multimedia information file as shown in Figs. 1A to 1C. Here, the three-dimensional image data may be non-compressed data or compressed and encoded data.

The multimedia information file thus generated may be recorded on a recording medium 13 or delivered directly to a communication channel.

As an example of the multimedia information reproduction apparatus of the present invention, an image data reproduction apparatus in this embodiment is described below.

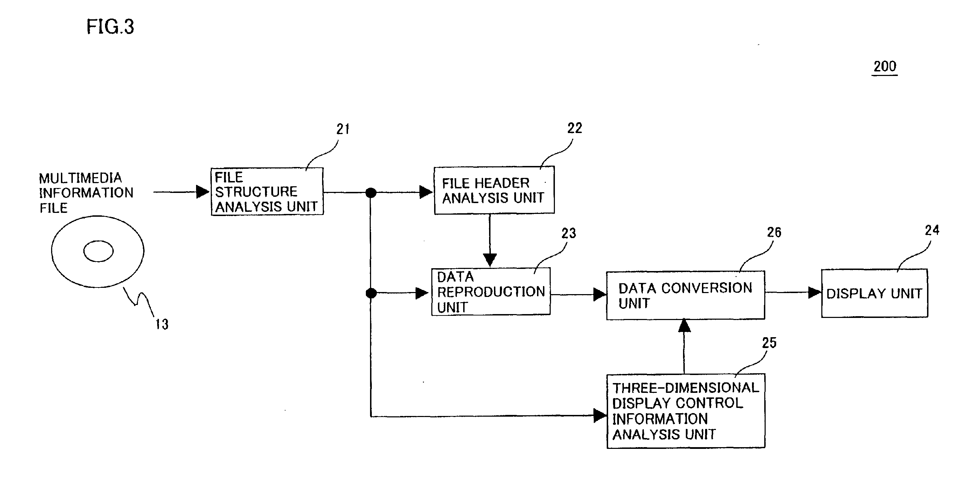

Fig. 3 is a block diagram illustrating a configuration of image data reproduction apparatus 200 to which a multimedia information file including three-dimensional image data as shown in Fig. 1 A is input.

Referring to Fig. 3, image data reproduction apparatus 200 includes a file structure analysis unit 21, a file header analysis unit 22, a data reproduction unit 23, a display unit 24, a three-dimensional display control information analysis unit 25, and a data conversion unit 26. The multimedia information file is provided from recording medium 13 or a communication channel.

File structure analysis unit 21 identifies each of header control information, three-dimensional image data and three-dimensional display control information of the input multimedia information file, and provides the header control information to file header analysis unit 22, the three-dimensional image data to data reproduction unit 23 and the three-dimensional display control information to three-dimensional display control information analysis unit 25.

File header analysis unit 22 analyzes the header control information and provides information necessary for reproducing the three-dimensional image data to data reproduction unit 23. Data reproduction unit 23 demultiplexes data, extracts data from packets, and decodes data if the data has been compressed and encoded. Three-dimensional display control information analysis unit 25 analyzes the three-dimensional display control information and provides information derived therefrom to data conversion unit 26. Data conversion unit 26 converts the decoded three-dimensional image data to allow the data to conform to a desired three-dimensional display form, and outputs the converted data to display unit 24. Display unit 24 may be a stand-alone three-dimensional display device independent of the reproduction apparatus.

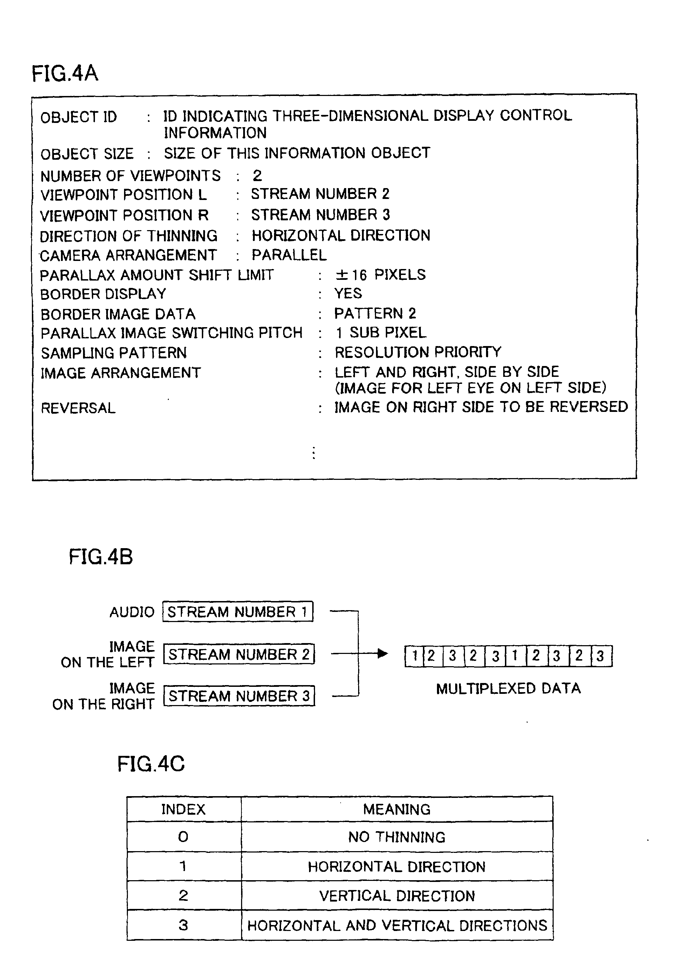

Figs. 4A to 4C are conceptual illustrations of specific information described in three-dimensional display control information 2.

The specific information described in three-dimensional display control information 2 includes, as partially shown in Fig. 4A, number of viewpoints, respective streams corresponding to respective positions of the viewpoints, direction of thinning, camera arrangement, parallax amount shift limit, whether a border image is to be displayed or not, border image data, parallax image switching pitch, sampling pattern, image arrangement, and whether image is reversed or not, for example.

The three-dimensional display control information shown in Fig. 4A is hereinafter described in further detail.

"Number of viewpoints" in Fig. 4A refers literally to the number of viewpoints, namely the number of parallax images, and is two when data according to the two-viewpoint system is provided.

When image pick-up is done by means of cameras, the cameras serve as eyes and the number of viewpoints in this case is accordingly the number of cameras. Since the number of human eyes is only two, data with the number of viewpoints of three or more is redundant. However, as an observer moves, the observed image changes so that a more natural stereoscopic vision can be implemented.

In Fig. 4A, subsequent to the line where the number of viewpoints is indicated, two lines (viewpoint position L, viewpoint position R) are shown where "stream number" corresponding to the left viewpoint position and that corresponding to the right viewpoint position are indicated respectively.

A detailed description of "stream number" is given below.

As shown in Fig. 4B, audio, an image for left eye and an image for right eye are provided as separate streams. It is supposed here that these are multiplexed in the packet form to be recorded. Then, in order to identify whether each packet in the multiplexed data is audio data, image data for left eye or image data for right eye, a specific stream number is allocated to each stream.

In the example shown in Fig. 4B, stream number 1 is allocated to the audio stream, stream number 2 is allocated to the image data for left eye and stream number 3 is allocated to the image data for right eye. The stream number is written in each packet header to indicate the type of data.

With this stream number, it is seen that the image for left eye is data of stream number 2 and the image for right eye is data of stream number 3 in Fig. 4A. It is noted that since the conventional multimedia information file for two-dimensional image data only distinguishes between audio and image, the information indicative of the correspondence between respective streams and respective positions of viewpoints is specific to the three-dimensional image data.

With reference to the conceptual illustrations shown in Figs. 5A to 5C, a further description is given of the aforementioned "number of viewpoints" and "viewpoint position".

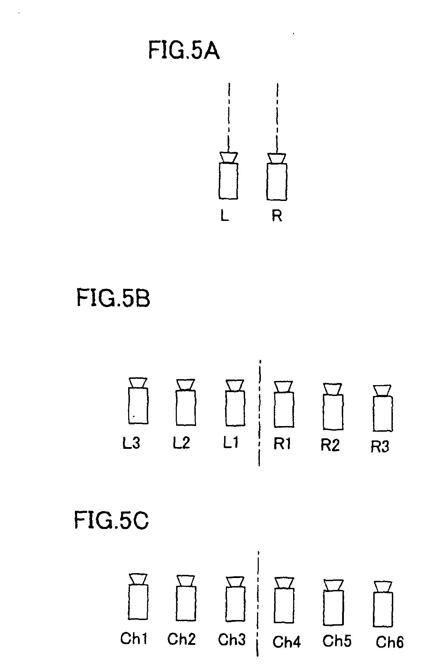

Fig. 5A shows an example of the two-viewpoint system and Figs. 5B and 5C show respective examples of the six-viewpoint system. In the two-viewpoint system of Fig. 5A, the viewpoint position can be specified by the indication of right or left.

In the six-viewpoint system, as shown in Fig. 5B for example, the viewpoint positions on the left are indicated by "L1", "L2" and "L3" based on the ordinal position numbered from the center. The viewpoint positions on the right are indicated in the same manner.

Alternatively, in the six-viewpoint system, as shown in Fig. 5C for example, the viewpoint positions may be indicated by the serial numbers starting from the leftmost position. Further, the viewpoint positions may be indicated in any of various manners other than those shown in Figs. 5B and 5C.

The manner in which the viewpoint position is indicated has to be shared in advance in the form of a specification or rule between the transmitter and the receiver. Without rule, it cannot be known whether the viewpoint position indicated by "ch3" for example is the third position from the left or the third position from the right.

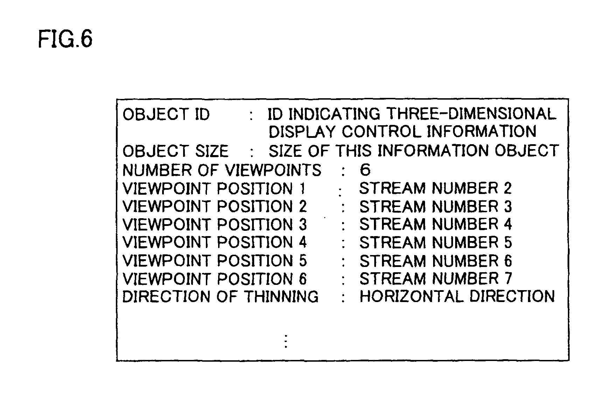

Fig. 6 is a conceptual illustration of an exemplary manner of describing correspondence between viewpoint positions and streams in the six-viewpoint system, provided to be compared with Fig. 4A.

In Fig. 6, with an audio stream having stream number 1 allocated thereto, image streams for viewpoint positions 1 to 6 are indicated for example by stream numbers 2 to 7 respectively. The stream numbers are written in respective packet headers for indicating the type of data.

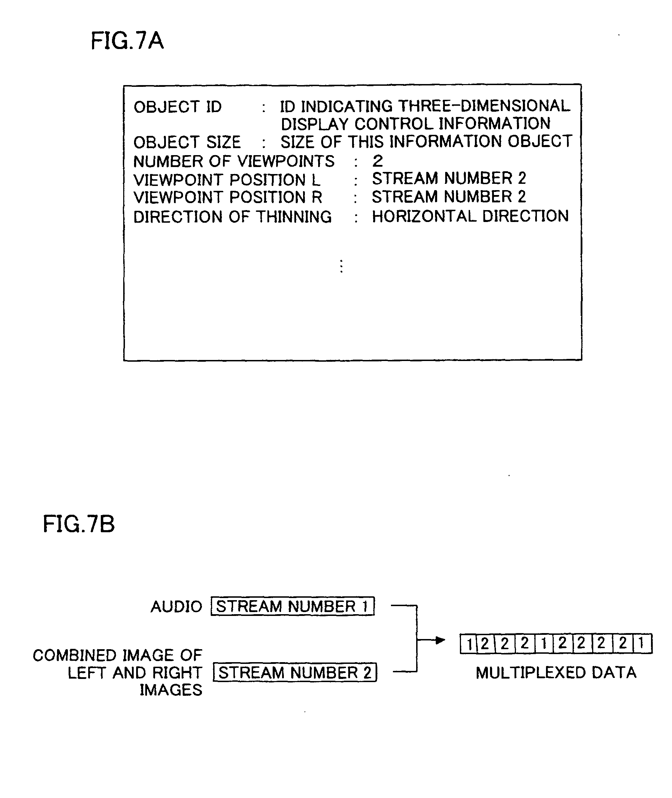

Figs. 7A and 7B are conceptual illustrations of an exemplary manner of describing correspondence between viewpoint positions and a stream in a case where the image for left eye and the image for right eye are in the same stream.

As shown in Fig. 7A, viewpoint position L and viewpoint position R are indicated by the same stream number (stream number 2 in this case). The multiplexed data in this case is shown in Fig. 7B. This manner of description may be employed when three-dimensional image data having a plurality of parallax images combined into a single image is recorded or transmitted.

Referring back to Figs. 4A to 4C, "direction of thinning" in Fig. 4A refers to the direction in which data is thinned out.

For example, when the paired images for left eye and right eye are arranged in the form of vertical stripes as shown in Fig. 42B according to "parallax barrier scheme (or lenticular scheme)" as described above, the horizontal resolution of the image for left eye and the image for right eye each is half that of a normal two-dimensional image. In this case, as "direction of thinning", information that thinning is done in the horizontal direction is described. This manner of description is irrelevant to whether the image for left eye and the image for right eye are provided as two streams independent of each other or as one stream of the mixed image as shown in Fig. 43C.

The image shown in Fig. 41 described above has data thinned in the vertical direction. Then, for the image as shown in Fig. 41, information that thinning is done in the vertical direction is described as "direction of thinning".

Moreover, as shown in Figs. 43A and 43B, images without having been thinned may be transmitted as they are and then thinned immediately before displayed. In this case, the data recorded in the file is not thinned. Then, information "no thinning" is described as the information as to the direction of thinning.

Such a parameter as the direction of thinning is difficult to numerically indicate. Then, it is desirable to provide a table as shown in Fig. 4C for representing the direction of thinning by a corresponding index defined in the table.

For example, when the direction of thinning is horizontal, "1" may be indicated in the column for the direction of thinning shown in Fig. 4A. In this case, the table in Fig. 4C showing the correspondence between the index and its meaning has to be shared between the transmitter and the receiver in the form of a specification or rule. This manner of indication may be applicable to other parameters.

Further, "camera arrangement" in Fig. 4A refers to how a plurality of cameras are arranged for image pick-up. The manner of arrangement is roughly classified into parallel arrangement, convergent arrangement and divergent arrangement.

The above-described Figs. 5A to 5C show examples of the parallel arrangement in which respective optical axes of cameras are arranged in parallel.

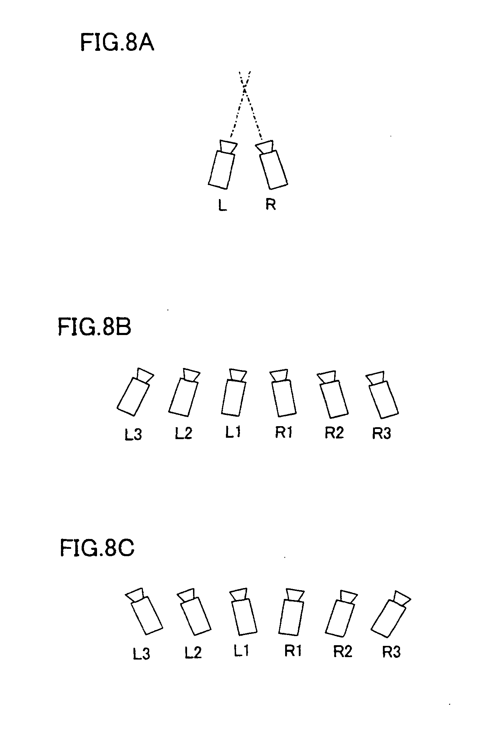

Figs. 8A to 8C are conceptual illustrations showing other examples of "camera arrangement".

Figs. 8A and 8B show examples of the convergent arrangement in which cameras are arranged so that respective optical axes of all the cameras converge at a certain point.

Fig. 8C shows an example of the divergent arrangement in which respective optical axes of all the cameras diverge from a certain point.

Here, Fig. 8A shows an example of the two-viewpoint system and Figs. 8B and 8C show examples of the six-viewpoint system. This information is used in making viewpoint interpolation and constructing a three-dimensional model.

Referring again to Figs. 4A to 4C, "parallax amount shift limit" in Fig. 4A is described.

Generally, when a display providing a stereoscopic vision is implemented using the binocular parallax as described in connection with Figs. 41, 42A and 42B, the feeling of depth can be adjusted by changing the amount of parallax.

Specifically, the amount of parallax can be changed for the combined image shown in Fig. 42B for example by leaving the image for left eye as it is and shifting only the image for right eye to the left or right. When the image is shifted leftward or rightward for changing the amount of parallax, a part of the combined image that corresponds to the amount of shift lies off screen since the width of the display screen is limited. Then, the part out of the screen cannot be displayed. Therefore, if an extreme degree of shift is permitted, what the image producer wants the viewer to see could not be displayed. Then, in order to avoid this situation, limitation is imposed on the amount of shift, which is herein referred to as "parallax amount shift limit" and is limited within a certain range like ±16 pixels for example.

"Border display" in Fig. 4A refers to whether a border image is displayed or not around the three-dimensional image data. The border image is displayed for producing some variation, adding interest, or facilitating stereoscopic vision.

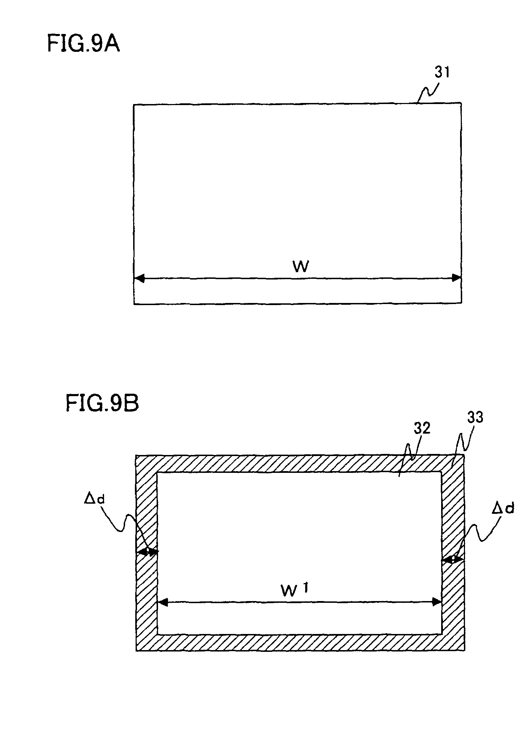

Figs. 9A and 9B are conceptual illustrations of the structure of the border image.

Fig. 9A shows a state where no border image is displayed and the whole screen corresponds to a normal three-dimensional image display region 31 with its width indicated by W.

In contrast, Fig. 9B shows a state where the border image is displayed. While the size of the whole screen is the same as that shown in Fig. 9A, border image 33 having width Δd is displayed along the periphery of the screen and the region inside the border image is a three-dimensional image display region 32. Therefore, as compared with the three-dimensional image display region without border image, the three-dimensional image display region displayed together with the border image is smaller by the size of the border. Supposing that the width of three-dimensional image display region 32 is W1, then a relation: W = W1 + 2•Δd is established. Respective widths of the four parts of border image 33 along the four sides respectively of the screen may be different from each other. Border image 33 itself may be three-dimensional image providing stereoscopic vision, or two-dimensional image providing planar vision.

The border image data displayed here may be provided in advance in the reproduction apparatus or included in the multimedia information file to be transmitted together with the three-dimensional image data.

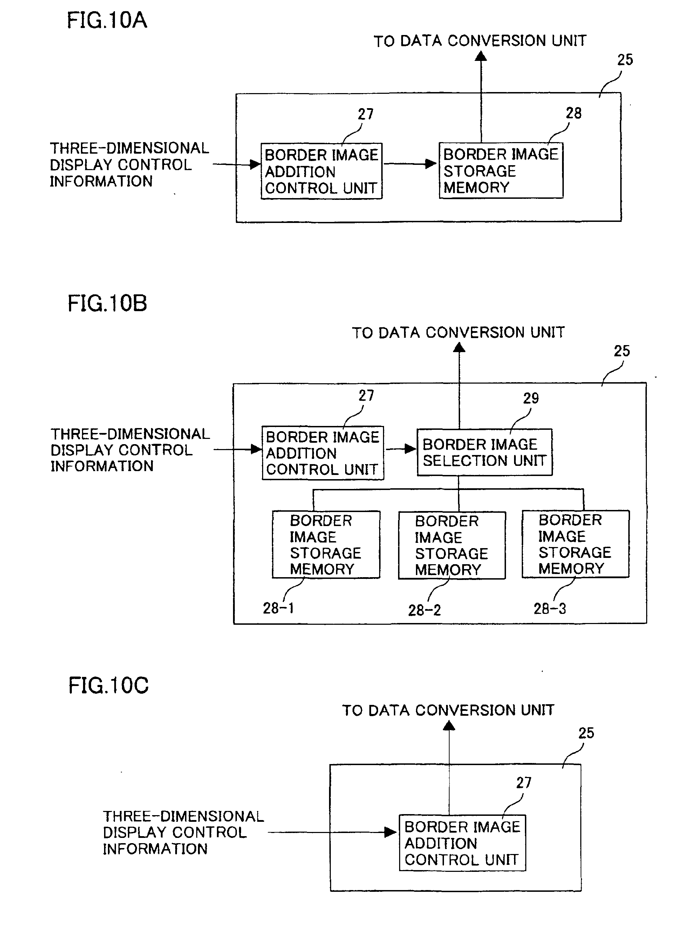

Figs. 10A to 10C are each a block diagram illustrating a configuration for providing "border image data" to display such a border image as described above.

Fig. 10A shows an exemplary configuration used in providing in advance "border image data" in image data reproduction apparatus 200. Fig. 10A shows in more detail the configuration of three-dimensional display control information analysis unit 25 of image data reproduction apparatus 200 shown in Fig. 3.

Referring to Fig. 10A, three-dimensional display control information analysis unit 25 includes a border image addition control unit 27 and a border image storage memory 28. Border image addition control unit 27 analyzes information as to whether or not the border is displayed that is included in three-dimensional display control information input thereto. When the border image is to be displayed, the border image prepared in border image storage memory 28 is output to data conversion unit 26. Data conversion unit 26 superimposes the border image on three-dimensional image data to output the resultant image to display unit 24.

Fig. 10B is another exemplary configuration used in providing in advance the border image data in the reproduction apparatus. In other words, Fig. 10B shows details of another configuration of three-dimensional display control information analysis unit 25 of image data reproduction apparatus 200 shown in Fig. 3.

Referring to Fig. 10B, three-dimensional display control information analysis unit 25 includes a border image addition control unit 27, a border image selection unit 29 and a plurality of border image storage memories 28-1 to 28-3.

In the example shown in Fig. 10B, when border image addition control unit 27 determines that the border is to be displayed, border image selection unit 29 determines which of a plurality of prepared border images is to be used and then calls the border image data from an appropriate border image storage memory to output the called data to the data conversion unit. The information as to the border image to be used is described in the three-dimensional display control information. In the case as shown in Fig. 10B, the information may be indicated as pattern 1 and pattern 2 for example for designating an appropriate image. The border images may include border images with different textures or stereoscopic border images with different pop-up amounts. In this way, an appropriate border image can be displayed for three-dimensional image data.

A border image to be used as default image may be prepared. On the condition that the border is to be displayed while no border image data is designated or the default border image is designated, the default border image may be used. When the reproduction apparatus includes no border image pattern designated as border image data, the default image may be used instead.

In the case as shown in Fig. 10A where only one border image data is prepared, the border image data may not necessarily be designated. However, as information about border image data, "default" may be indicated.

In the cases as shown in Figs. 10A and 10B, data about the border image is stored in image data reproduction apparatus 200 and information described in the three-dimensional display control information is selective information, namely information indicating which of one or more prepared border images is to be used.

Fig. 10C shows an example of the configuration of three-dimensional display control information analysis unit 25 of image data reproduction apparatus 200 in a case where border image data included in the multimedia information file is sent together with three-dimensional image data.

Referring to Fig. 10C, three-dimensional display control information analysis unit 25 includes a border image addition control unit 27. When border image addition control unit 27 determines that the border is to be displayed, border image data included as three-dimensional display control information is sent to data conversion unit 26. Specifically, in this example, instead of selective information, border image data itself is described as border image data information. In this way, a border image freely generated by a sender of a multimedia information file can be added.

### <Other Elements of Three-Dimensional Display Control Information>

Exemplary three-dimensional display control information is mainly described below that is used when three-dimensional image data, employed in the parallax barrier scheme or lenticular scheme described above and shown in Figs. 42A and 42B, is generated into a file.

"Parallax image switching pitch" in Fig. 4A refers to the intervals at which stripes of different parallax images are repeatedly arranged in cycles as shown in Fig. 42B.

Figs. 11A to 11D are conceptual illustrations showing a positional relation between a liquid-crystal panel and slits of a parallax barrier used in the parallax barrier scheme.

Figs. 11A to 11D show liquid-crystal panel 106 for displaying a three-dimensional image. Here, a unit or combination of R, G and B, indicated by 105, is called pixel and each of elements R, G and B is called sub pixel. In other words, one pixel is equal to three sub pixels.

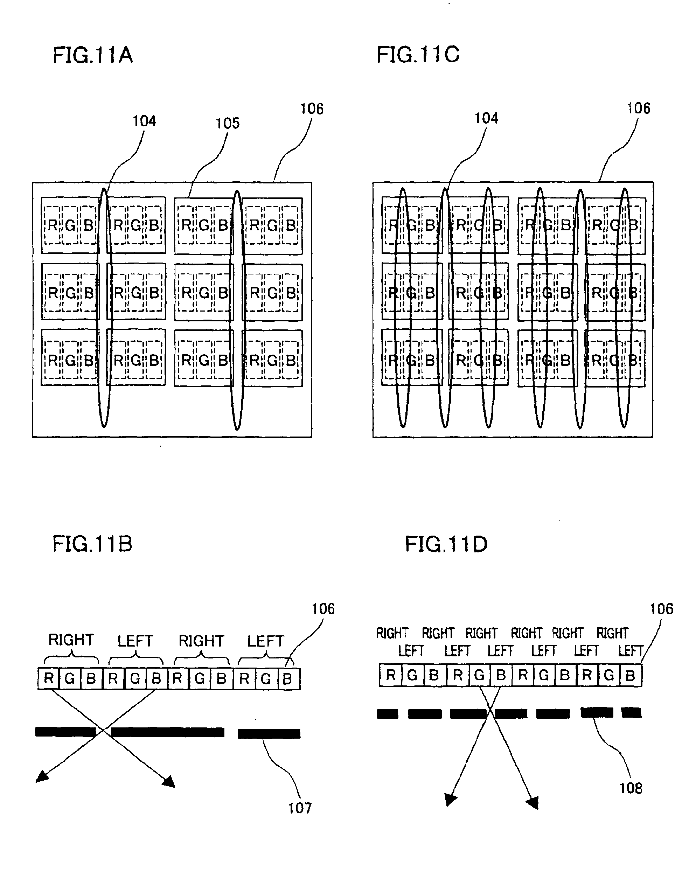

In Fig. 11A, the parallax image switching pitch in the parallax barrier scheme is one pixel. In this case, one slit 104 is allocated per two pixels. Fig. 11B is a top view of Fig. 11A. As shown in Fig. 11B, an image displayed on liquid-crystal panel 106 includes images for right eye and images for left eye that are alternately arranged pixel by pixel. The distance between two slits of a parallax barrier 107 is two pixels in this case.

In Fig. 11C, the parallax image switching pitch in the parallax barrier scheme is one sub pixel (1/3 pixel). In this case, one slit 104 is allocated per two sub pixels. Fig. 11D is a top view of Fig. 11C. As shown in Fig. 11D, an image displayed on liquid-crystal panel 106 includes images for right eye and images for left eye that are alternately arranged sub-pixel by sub-pixel. The distance between slits of a parallax barrier 108 is two sub pixels.

"Sampling pattern" in Fig. 4A refers to a method of thinning that is employed when an original image is thinned in the horizontal direction to generate images for right and left eyes.

The sampling pattern includes "color-reproducibility-priority scheme" and "resolution-priority scheme".

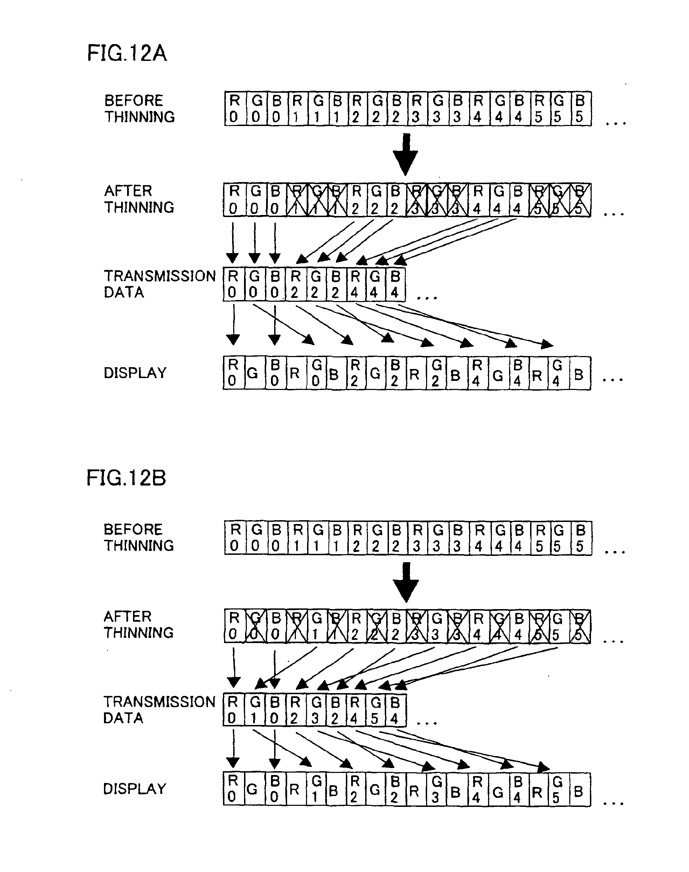

Figs. 12A and 12B are conceptual illustrations of the sampling pattern.

Fig. 12A represents "color-reproducibility-priority scheme" and Fig. 12B represents "resolution-priority scheme".

In Figs. 12A and 12B, image data are represented in the forms R0 and G1 for example where first letters R, G and B represent color components and the following numerals 0 and 1 for example represent the horizontal pixel position.

According to the color-reproducibility-priority scheme in Fig. 12A, data is thinned by half by reducing the data pixel by pixel. The remaining data after thinned through sampling at every one pixel is comprised of only the data at even-numbered positions. In this scheme, the set of remaining R, G and B is the same as that before thinned, providing good color reproducibility.

In contrast, according to the resolution-priority scheme in Fig. 12B, data is thinned by half by reducing the data sub-pixel by sub-pixel. After thinned, data at pixel position 0 is only ofR and B components while data at pixel position 1 is only of G component. As compared with data before thinned, data after thinned includes no pixel with the same set of R, G and B. However, in the data after thinned, data at all pixel positions are included for at least one color component. Therefore, the perceived resolution is high. Then, for example, diagonal jaggy lines are somewhat imperceptible.

It is noted that the resolution-priority scheme in Fig. 12B is effected on the precondition that the parallax image switching pitch is on the basis of sub pixel, and thus only the color-reproducibility-priority scheme in Fig. 12A can be selected in principle when the parallax image switching pitch is one pixel as shown in Fig. 11A.

"Image arrangement" in Fig. 4A refers to information that is required when a plurality of parallax images are arranged to constitute one image as shown in Fig. 43C and the resultant image is transmitted and recorded.

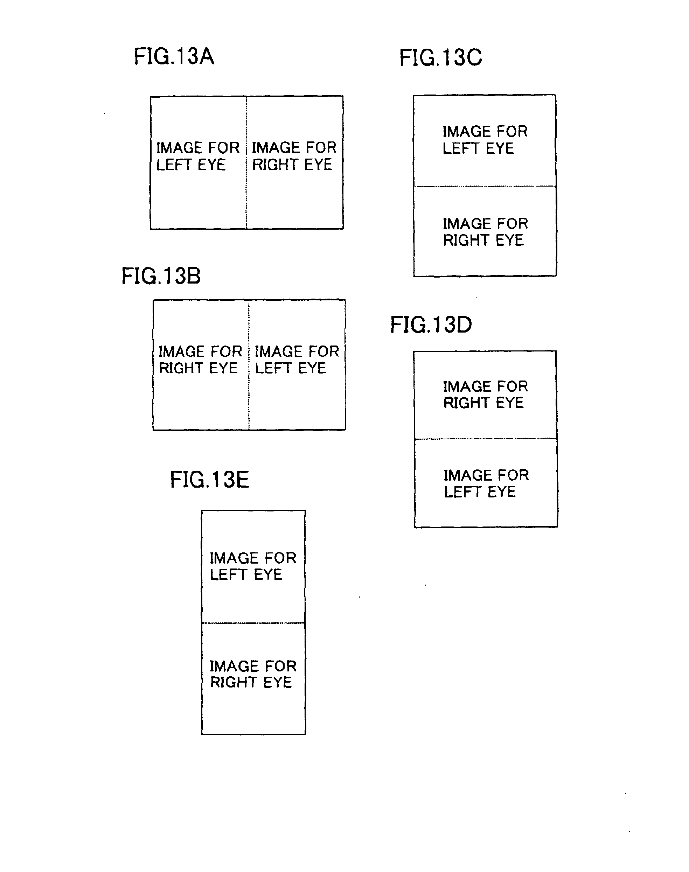

Figs. 13A to 13E are conceptual illustrations of image arrangement for arranging a plurality of parallax images into one image.

When an image for left eye and an image for right eye after horizontal thinning are arranged side by side to constitute one image, an arrangement is the one as shown in Fig. 13A having the image for left eye on the left and the image for right eye on the right. Another arrangement may be the one as shown in Fig. 13B having the left image for left eye on the right and the image for right eye on the left.

When an image for left eye and an image for right eye after vertically thinned are arranged in the vertical direction to constitute one image, the images may be arranged as shown in Fig. 13C with the image for left eye on the top of the image for right eye or arranged as shown in Fig. 13D with the image for left eye under the bottom of the image for right eye.

Accordingly, information as to whether a plurality of parallax images are arranged side by side or vertically and information as to whether the image for left eye is on the left or right or on the top or bottom are described to identify the way of arrangement and the positional relation. It is noted that the number of viewpoints (number of parallax images) is not limited to two.

The direction of thinning and the direction in which images are arranged may be taken independently of each other. Specifically, images after horizontally thinned may be arranged vertically as shown in Fig. 13E. In contrast, the direction of thinning and the direction in which images are arranged may be the same so that one of the information as to the way of arrangement and the information as to the positional information may be dispensed with.

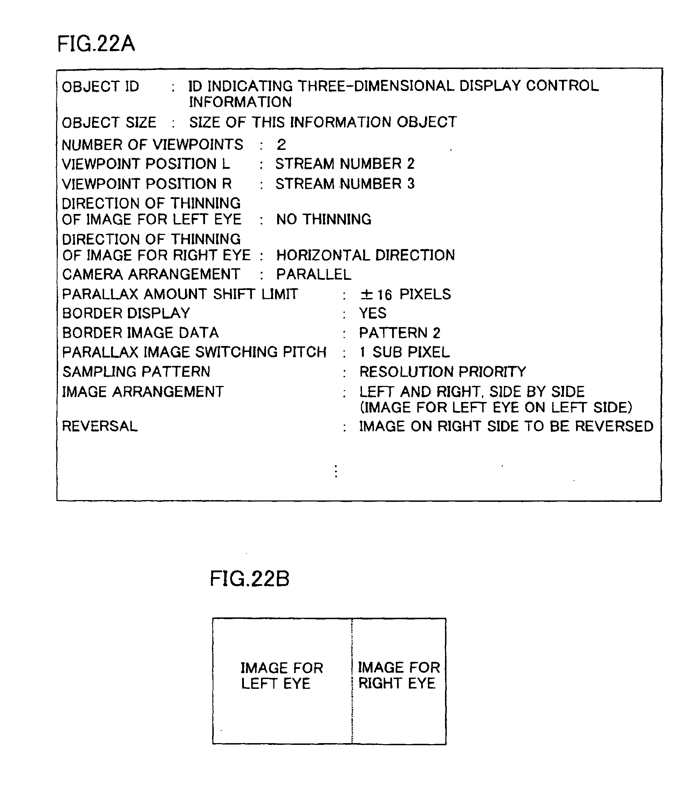

Further, the information as to the direction of thinning as described above may be indicated separately for the image for left eye and the image for right eye. In the exemplary three-dimensional display control information shown in Fig. 22A, the direction of thinning for left eye image is indicated as "no thinning" while the direction of thinning for right eye image is indicated as "horizontal". In this case, the image for left eye and the image for right eye arranged side by side is the one as shown in Fig. 22B having the image for left eye and the image for right eye that are different in size. In this manner, good image reproduction can be accomplished for both of an image data reproduction apparatus having a display unit that can display only two-dimensional images and an image data reproduction apparatus having a display unit that can display three-dimensional images in addition to two-dimensional images. Specifically, when the image data reproduction apparatus capable of displaying two-dimensional images only receives the image data shown in Fig. 22B, the apparatus can display only the image for left eye that has not been thinned and thus provide high resolution. When the image data reproduction apparatus capable of displaying three-dimensional images receives the image data shown in Fig. 22B, the reproduction apparatus can horizontally thin the image for left eye to make the left-eye image identical in resolution to the image for right eye and then make data conversion for providing three-dimensional display, so that the three-dimensional display similar to that obtained when the image data as shown in Fig. 13A is received can be accomplished.

"Reversal" in Fig. 4A refers to whether each of a plurality of parallax images arranged to constitute one image is reversed or not.

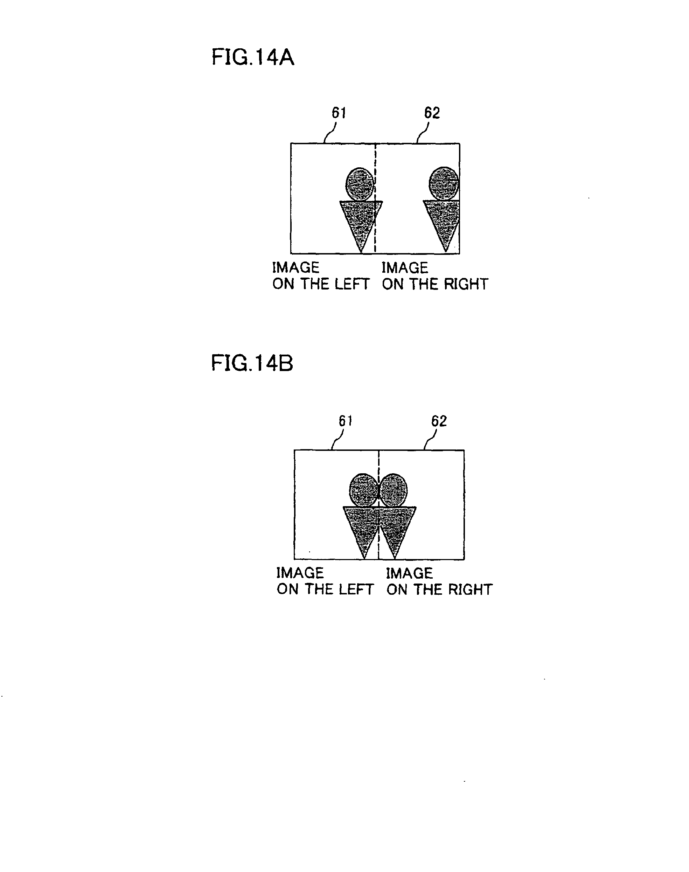

Fig. 14A and 14B are conceptual illustrations of the reversal of respective images.

In Fig. 14A, an image for left eye 61 and an image for right eye 62 are simply arranged on the left and right respectively. When image for right eye 62 is reversed in the horizontal direction, the resultant arrangement is the one as shown in Fig. 14B. When an image is coded to be recorded and transmitted, the image including regions having similar features that are located relatively closer to each other is coded at higher coding efficiency in some cases. In some cases, therefore, the image in Fig. 14B is coded at higher coding efficiency than the image in Fig. 14A. When the arrangement as shown in Fig. 14B is employed, reproduction apparatus 200 has to reverse the image for right eye again to set the right-eye image in the original state.

When two parallax images are arranged side by side, the way of reversal may include "no reversal", "reverse left image", "reverse right image" and "reverse both images". Here, "left image" is defined as the left one of the two images arranged side by side. Therefore, when the arrangement in Fig. 13A is employed, the left image refers to the image for left eye. Further, when the arrangement in Fig. 13B is employed, the left image refers to the image for right eye. It is noted that the indication may be "reverse image for left eye" instead of "reverse left image" since the information as to the image arrangement as described above can be used to know on which of the left and right the image for left eye is located.

All of the items of "three-dimensional display control information" heretofore described are not requisite for the multimedia information file and some of the items may be dispensed with as required. In this case, any indication may separately be defined so that it can be known which items are described in the file.

It is noted that the object ID in Fig. 4A indicates that a unit of the information object begins at the position of the object ID and that the information object relates to three-dimensional display control information. In other words, such an object ID also serves as three-dimension identification information indicating that the multimedia information file includes the three-dimensional image control information, namely three-dimensional image data.

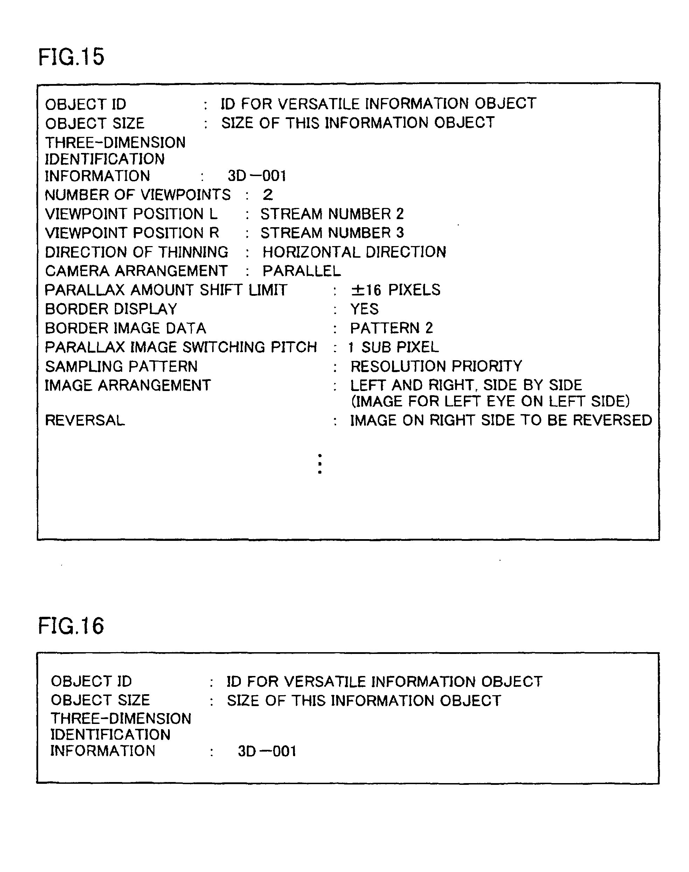

As shown in Fig. 15, a versatile ID may also be used as the object ID of a three-dimensional image control information object. In this case, this ID only indicates that a unit of the information object begins at the position of the ID, and information as to the type of information written in the information object is separately provided in the object. In Fig. 15, the information indicating that this information object relates to three-dimensional display control information is represented by three-dimension identification information: 3D-001. This information 3D-001 is merely an example and arbitrary numerals or character string may be used as the three-dimension identification information.

In the above-described example, the three-dimension identification information is used for indicating that the three-dimensional image data is included. Further, different indications of three-dimension identification information may be provided for respective three-dimensional display schemes different from each other so that the schemes can be distinguished from each other. For example, as the three-dimension identification information, 3D-001 may be provided for data in accordance with the parallax barrier scheme and 3D-002 may be provided for data in accordance with a liquid-crystal shutter scheme.

Moreover, as shown in Fig. 16, the three-dimension identification information may constitute one information object by itself. In this case, a multimedia information file may hold three-dimension identification information 41 and three-dimensional display control information 2 as separate objects.

It is noted that dedicated extensions may be used instead of the three-dimension identification information for indicating that a multimedia information file includes three-dimensional image data. For example, when extensions "jpg" are used for a normal multimedia information file including two-dimensional image data, extensions "3da" may be used for a multimedia information file including three-dimensional image data so that it can be identified by means of the extensions whether or not the multimedia information file includes three-dimensional image data. Moreover, different extensions may be used for different three-dimensional display schemes for distinguishing the different three-dimensional display schemes from each other. For example, extensions "3da" may be used for a multimedia information file including data in accordance with the parallax barrier scheme while extensions "3db" may be used for a multimedia information file including data in accordance with the liquid-crystal shutter scheme.

An advantage of the use of extensions for three-dimensional identification is that it can be determined, without analysis of the inside of a file, whether or not the file includes three-dimensional image data or what type of three-dimensional display scheme the data in the file follows. For example, when there are a number of multimedia information files on a hard disk, one can speedily find which of the files can be reproduced by one's terminal. In another example, when there are a plurality of multimedia information files on a server, a terminal capable of reproducing two-dimensional images only can be prevented from downloading a three-dimensional image.

When the above-described three-dimension identification information is used for the three-dimensional identification, an advantage is that the important three-dimension identification information is difficult to modify since the three-dimension identification information is stored unless the contents of the file are rewritten.

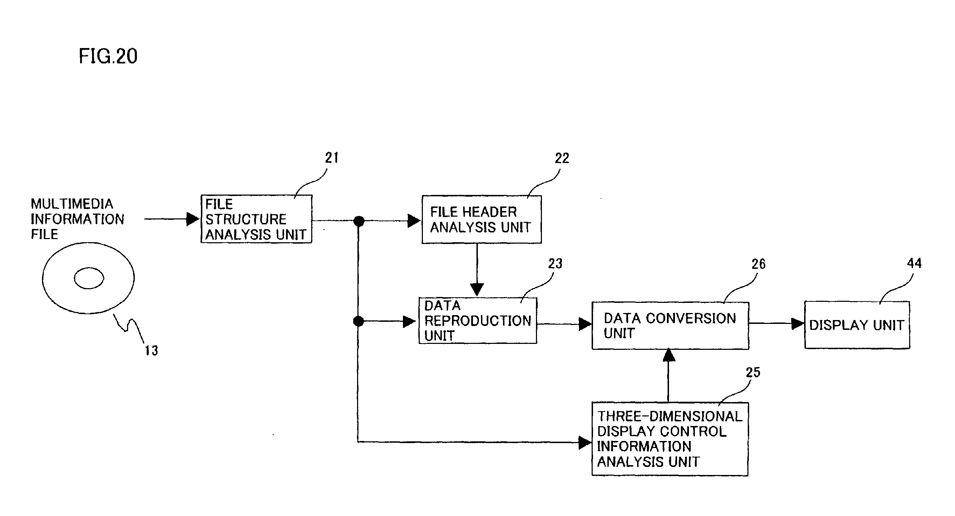

As a display unit which displays images, a display unit capable of making a switch between two-dimensional display and three-dimensional display may be used. Specifically, an image data reproduction apparatus shown in Fig. 20 has a display unit 44 that is capable of making a display-mode switch between two-dimensional display and three-dimensional display. The display unit may be display means capable of automatically making the switch. Here, a description of components and features common to this image data reproduction apparatus and the image data reproduction apparatus in Fig. 3 is not repeated. The image data reproduction apparatus in Fig. 20 is used for an application where three-dimension identification information and three-dimensional display control information are included in the same object as shown in Fig. 15. A three-dimensional display control information analysis unit 25 determines whether the three-dimension identification information is included or not and switches the display mode of display unit 44 according to the result of the determination. In other words, three-dimensional display control information analysis unit 25 has an additional function of determining the type of the file. When an input multimedia information file includes three-dimension identification information, display unit 44 presents a display in the three-dimensional display mode. When no three-dimension identification information is included, display unit 44 presents a display in a two-dimensional display mode.

When the display unit is dedicated to three-dimensional display, any file with no three-dimension identification information may not be reproduced or may be subjected to any form of two-dimensional to three-dimensional conversoin for producing a display. On the contrary, when the display unit is dedicated to two-dimensional display, any file having three-dimension identification information may not be reproduced or may be subjected to any form of three-dimensional to two-dimensional conversion for producing a display.

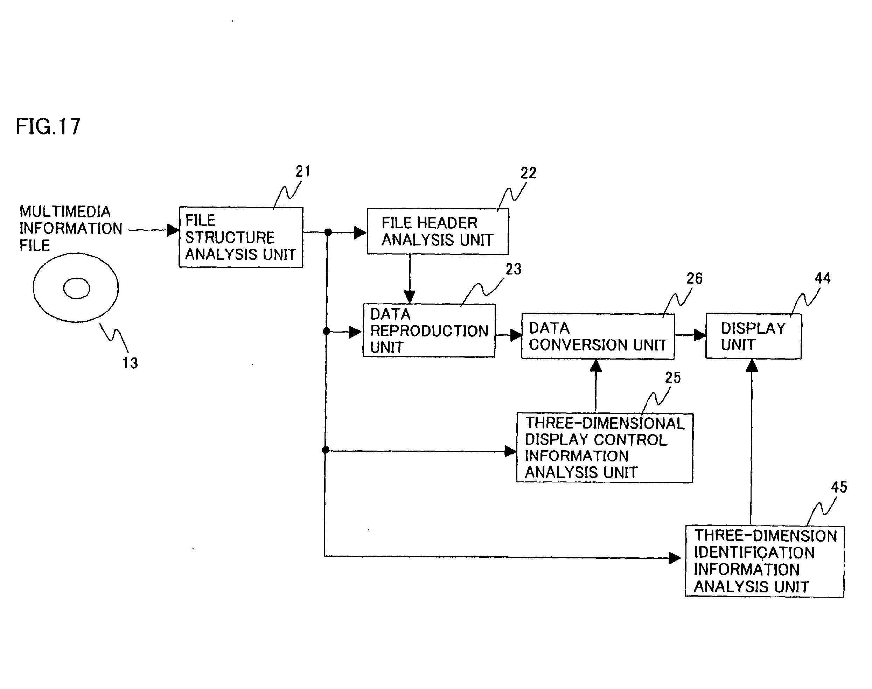

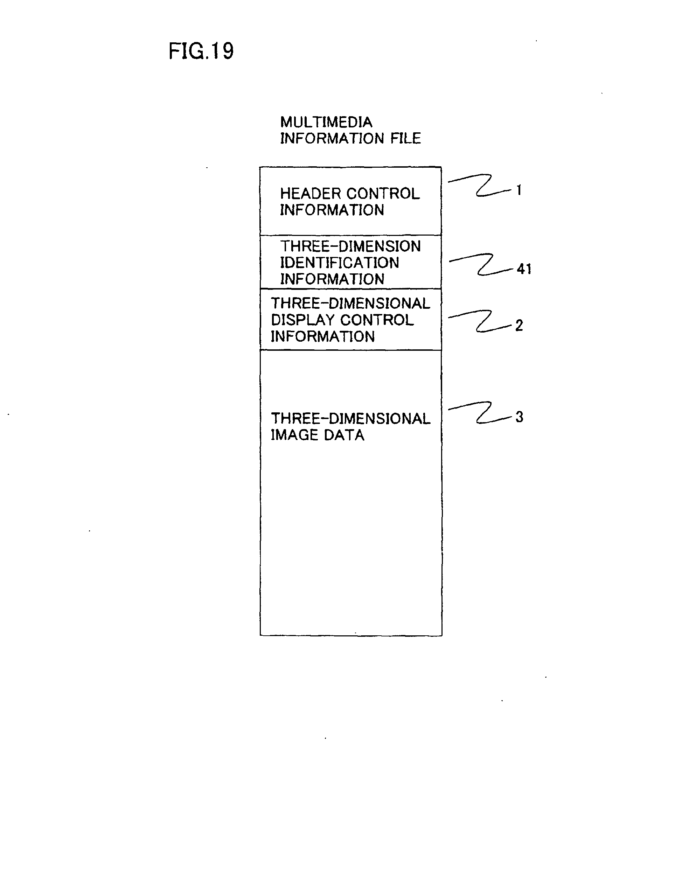

An image data reproduction apparatus shown in Fig. 17 is used for an application where three-dimension identification information and three-dimensional display control information are included in separate objects as shown in Fig. 19. In the image data reproduction apparatus in Fig. 17, a three-dimension identification information analysis unit 45 analyzes whether or not three-dimension identification information is included in a multimedia information file and switches the display mode of a display unit 44 according to the result of the determination. In other words, three-dimension identification information analysis unit 45 has the function of determining the type of the file.

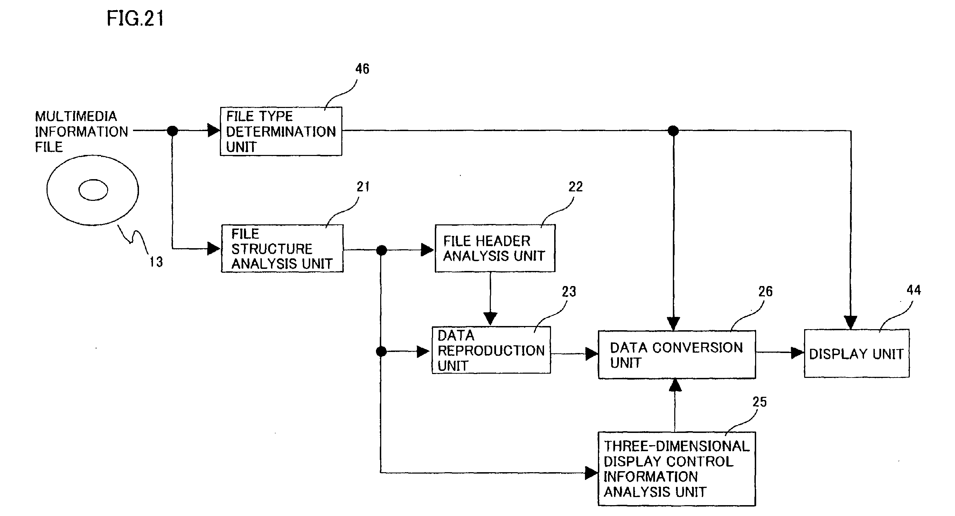

When the three-dimensional identification is done by means of extensions as described above, switching between two-dimensional display and three-dimensional display may be done by means of extensions. An image data reproduction apparatus shown in Fig. 21 is used for an application where the three-dimensional identification is done by means of extensions. A file type determination unit 46 analyses extensions. According to the result of the analysis, the display mode of a display unit 44 and the way of conversion by a data conversion unit 26 are controlled.

It is seen from the above that the three-dimension identification information is used for determining whether or not a multimedia information file includes three-dimensional image data. Regarding the encoding format of image data, the same encoding format may be used regardless of whether an image is a two-dimensional image or three-dimensional image. Therefore, a common decoder may be used. In this case, while any observing person who sees a decoded image can determine whether the image is to be output as a two-dimensional image or three-dimensional image, the reproduction apparatus cannot distinguish between a two-dimensional image and a three-dimensional image. Therefore, in order for the reproduction apparatus to distinguish therebetween, the three-dimension identification information is necessary. The reproduction apparatus requires such information not only for the distinction between the two-dimensional image and the three-dimensional image but also for the determination as to which of a plurality of three-dimensional display formats is used. Based on the result of the determination, switching between the three-dimensional display mode and the two-dimensional display mode can automatically be made.

Further, while the multimedia information file in Fig. 1A includes only a piece of three-dimensional display control information, a multimedia information file including three-dimensional image data comprised of a plurality of images like moving images may have respective pieces of three-dimensional display control information provided at respective beginnings the image data. Alternatively, the three-dimensional display control information may repeatedly be stored at arbitrary positions in three-dimensional image data.

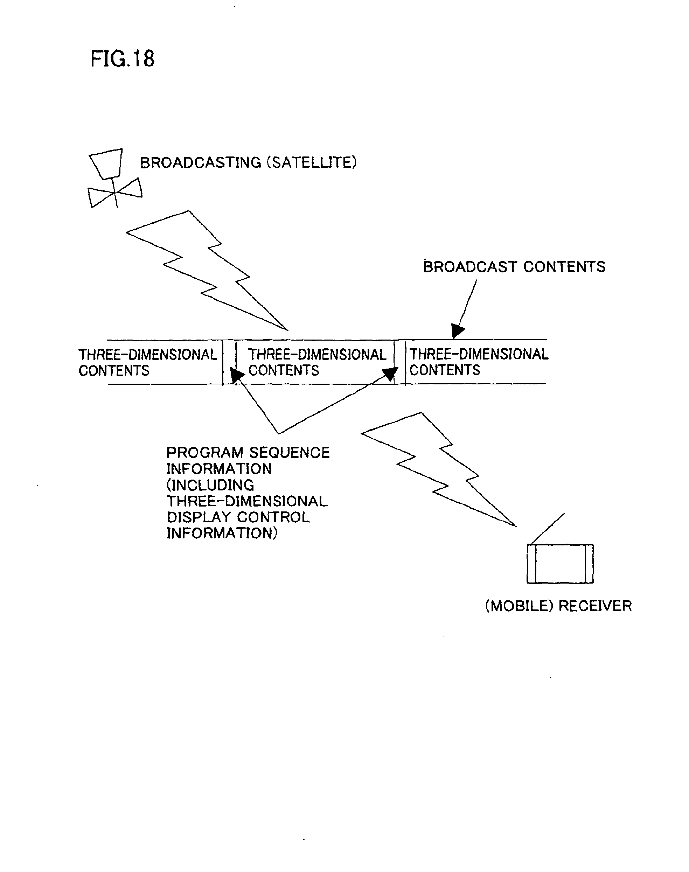

Moreover, when moving images are satellite-broadcasted, ground-wave-broadcasted, or broadcasted via such a transmission medium as the Internet, there could be a case where a viewer receives or watches the images in the middle of the broadcast or switches the channel. It is therefore desirable to insert the three-dimensional display control information at regular intervals in the form of program sequence information into broadcast contents as shown in Fig. 18, instead of providing only a piece of three-dimensional display control information at the beginning. Here, the broadcast contents refer to encoded data having multiplexed stereoscopic image data, audio data and BML data concerning their contents for example. Further, in the program sequence information, information indicating relations between the image data, audio data and BML data for example (sync information) as well as copyright information are included, and the three-dimensional display control information is also stored in the program sequence information. Alternatively, the three-dimensional display control information may directly be multiplexed repeatedly in three-dimensional image data (encoded data), instead of being included in the program sequence information. By repeatedly inserting the three-dimensional display control information or three-dimension identification information into broadcast contents as described above, it can be known whether received data is three-dimensional image or not, or parameter information necessary for three-dimensional display can be known if the received data is three-dimensional image, even when reproduction is started in the middle of a program.

The following description is of a case where one multimedia information file includes at least one piece of three-dimensional image data, at least one piece of two-dimensional image data and at least one piece of page data for example. Here, the page data refers to data described in such page description language as HTML and BML. Further, an image having lines and tables for example that are drawn based on the page data is called page image. While the multimedia information file may additionally include music data and other type of data, the description thereof is not given here for the purpose of simplification.

Such a multimedia information file as described above has to include information inserted thereto for identification of whether the included image data is two-dimensional image data or three-dimensional image data. This is implemented in the examples described below.

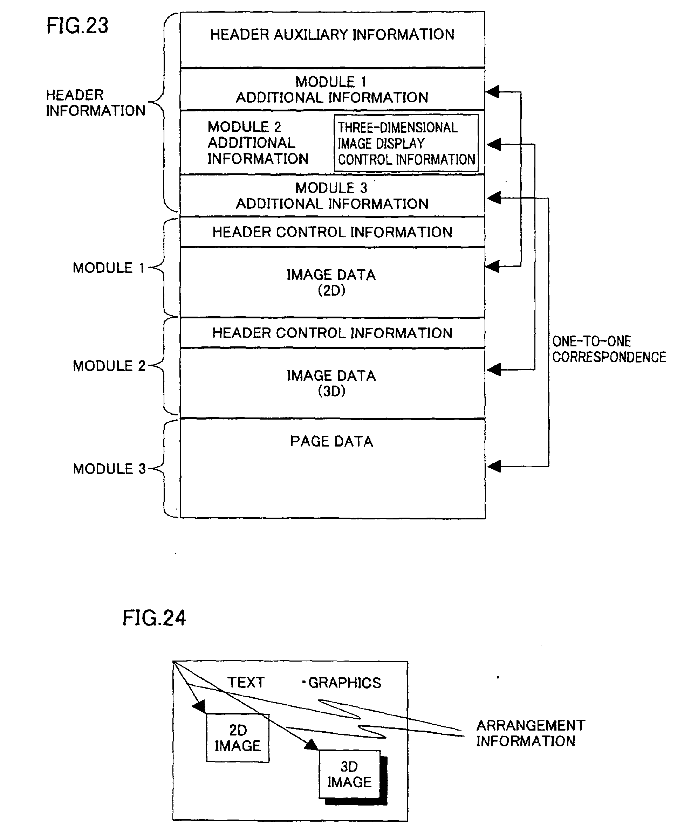

Fig. 23 is a conceptual illustration of a structure of a multimedia information file including both of two-dimensional image data (image data (2D)) and three-dimensional image data (image data (3D)).

This type of a multimedia information file is comprised of header information and such multimedia data as image data (3D), image data (2D) and page data. Each multimedia data is stored in a block called "module". The header information includes information for managing each module (header auxiliary information) as well as module additional information for reproducing each module. For example, the module additional information for module 1 is called "module 1 additional information". The module additional information includes information for distinguishing between image data and page data for example. It is noted that, for image data, header control information used for decoding the image data is provided at the beginning of each module.

Fig. 24 is a conceptual illustration of a state in which a two-dimensional image (2D image) and a three-dimensional image (3D image) are arranged on a screen with respect to the origin of the screen.

The page data also includes arrangement information for example that indicates respective positions and respective sizes of the image data to be arranged on the screen as shown in Fig. 24. When the arrangement information of the images is defined separately, the arrangement information is not necessarily included in the page data.

Referring again to Fig. 23, the number of pieces of aforementioned module additional information included in the header information is equal to the number of modules included in the multimedia information file, and respective pieces of module additional information are in one-to-one relation with the modules. Only when the three-dimensional image data is stored in the module, the above-described three-dimensional image display control information is inserted into its corresponding module additional information. Specifically, in the example shown in Fig. 23, there are three modules, a first module includes two-dimensional image data, a second module includes three-dimensional image data and a third module includes page data. Into the module additional information corresponding to the second module in the header information, three-dimensional image display control information is inserted.

Accordingly, if the three-dimensional image display control information is included in the module additional information, it can be determined that the module corresponding to this module additional information includes three-dimensional image data. If not, it can be determined that the corresponding module includes two-dimensional image data or other data. In the example of the screen shown in Fig. 23, distinction between two-dimensional image data and three-dimensional image data can be made in the above-described manner.

While the region of the module additional information may not include data indicating substantial contents of the module additional information, the region itself of the module additional information is present without exception. By allowing the number of pieces of module additional information to be equal to the number of modules and allowing the order in which they are stored to be identical to each other, the pieces of module additional information and the modules can correctly be correlated with each other. Thus, data indicating the size of the region of each module additional information is inserted to the beginning of each module additional information.

The data indicative of the size of the module additional information may collectively be inserted to the beginning of a plurality of pieces of module additional information. Further, instead of the data indicating the size, a predetermined pattern that can be identified as a border between regions may be provided between pieces of module additional information to secure the region.

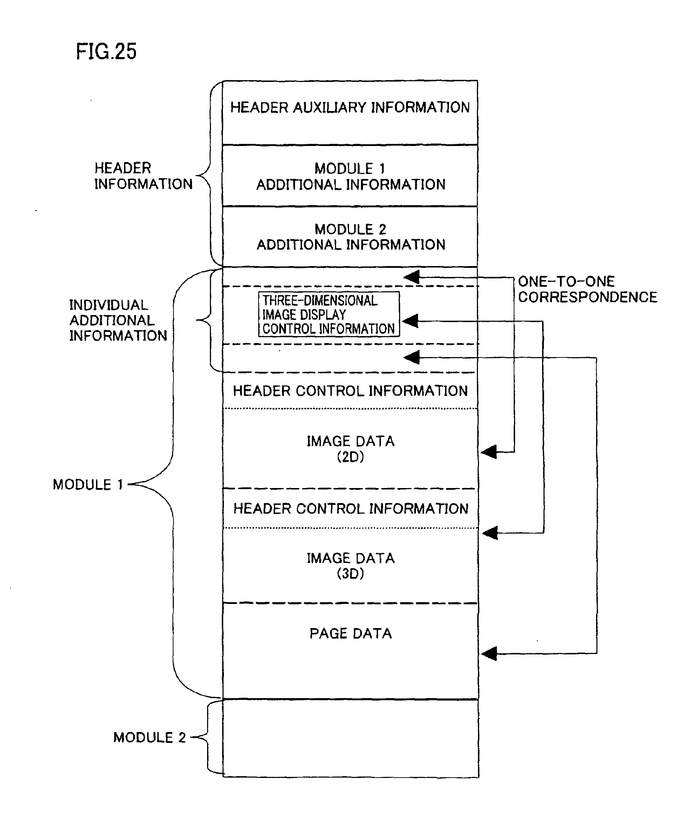

Fig. 25 is a conceptual illustration of another structure of the multimedia information file. As shown in Fig. 25, a plurality of pieces of multimedia data and information including data size and data type for example provided at the beginning of the multimedia data are combined into one module. Since the module additional information is correlated with a module, the information included in the module additional information and each multimedia data in the module cannot be correlated with each other. Then, in Fig. 25, in addition to a plurality of pieces of multimedia data, respective pieces of additional information correlated therewith are collected into one module. While the additional information correlated with each multimedia information may not include data indicating substantial contents thereof, there are respective regions of the additional information without exception. On the condition that the number of pieces of additional information is equal to the number of pieces of multimedia information and the order in which they are stored is identical, respective pieces of multimedia information can be correlated with the additional information.

Accordingly, the three-dimensional image display control information can be included in the additional information to distinguish between two-dimensional image data and three-dimensional image data.

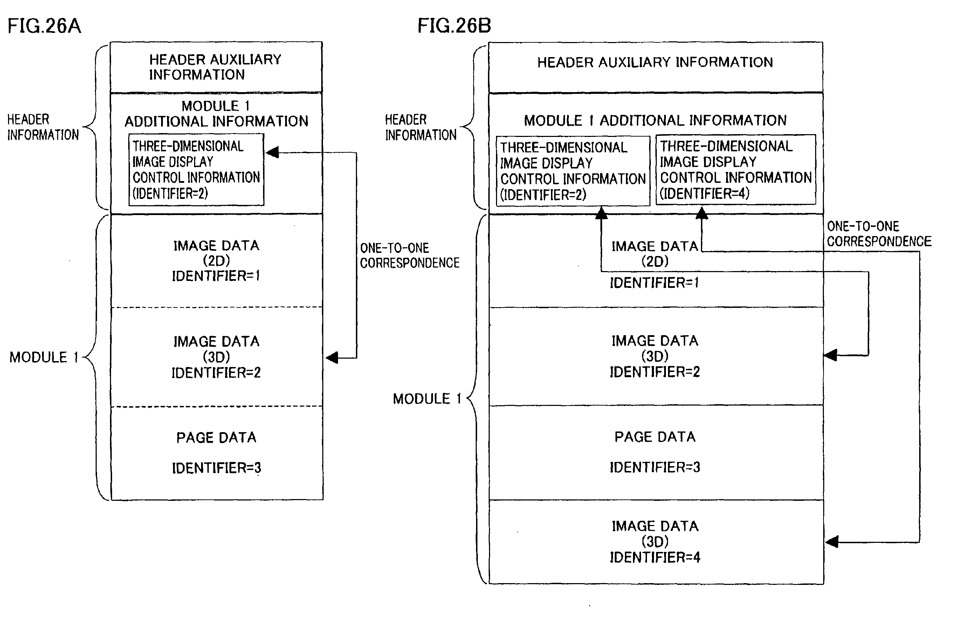

Figs. 26A and 26B are conceptual illustrations of further structures of the multimedia information file.

Specifically, an identifier of multimedia data in a module is included in three-dimensional image display control information so that image data is correlated with the three-dimensional display control information. In Fig. 26A, respective identifier numbers are allocated to respective pieces of multimedia data in a module and the identifier of the three-dimensional image data is included in three-dimensional image control information stored in the region of the module additional information. With this structure, distinction between two-dimensional image data and three-dimensional image data can be made. Further, when a module includes a plurality of pieces of three-dimensional image data, a plurality of pieces of three-dimensional image display control information may be included in the module additional information region as shown in Fig. 26B to make distinction between two-dimensional image and three-dimensional image in the module.

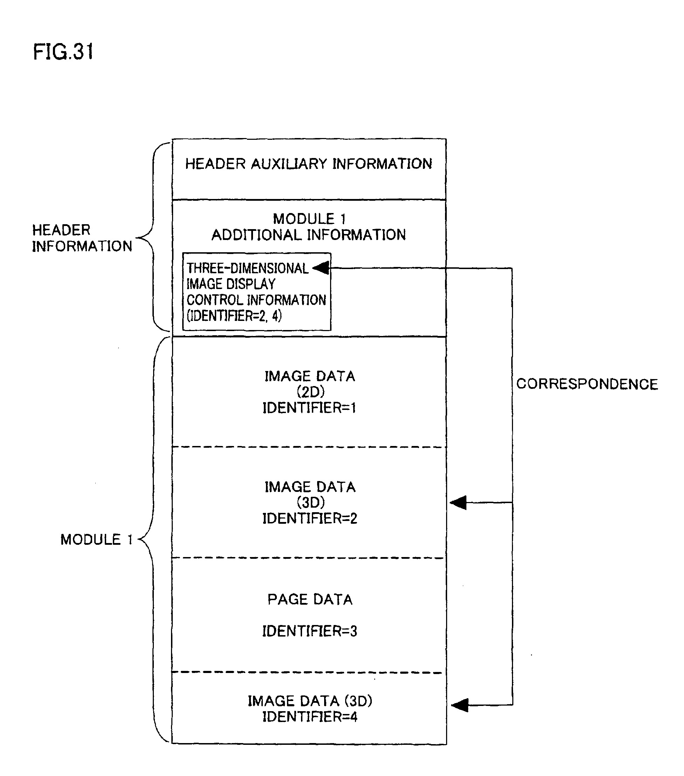

Fig. 31 is a conceptual illustration of a further structure of the multimedia information file. Specifically, as shown in Fig. 31, a plurality of identifiers can be included in the three-dimensional image display control information to make distinction between two-dimensional image and three-dimensional image.

It is noted that while one module is provided in each of examples of Figs. 26A, 26B and 31, a plurality of modules may be included in the multimedia information file. In this case, respective identifiers are allocated to a plurality of pieces of three-dimensional data included in these modules so that the three-dimensional image data can be distinguished from each other.

Here, when all of the image data stored in one module are three-dimensional image data, only one piece of three-dimensional image display control information having an identifier of 0 for example may be stored, instead of all three-dimensional image display control information corresponding respectively to the three-dimensional image data. Specifically, it is defined that the identifier number of the multimedia data is an integer of 1 or more and the identifier number of 0 represents that all the images in the module are three-dimensional images. In this case, it is unnecessary to store a plurality of pieces of three-dimensional image display control information, reducing the total amount of codes.

Examples in which the identifier is allocated to the multimedia data have been described. Alternatively, the identifier may be allocated to a module in such a case where one module corresponds to one multimedia data as shown in Fig. 23. In this case, the section from "module 1 additional information" to "module 3 additional information" in Fig. 23 may be replaced with the contents of "module 1 additional information" in Fig. 26A to enable distinction between two-dimensional image data and three-dimensional image data in a similar manner. Further, the section from "module 1 additional information" to "module 3 additional information" in Fig. 23 may be replaced with the contents of "module 1 additional information" in Fig. 31 so that it can be identified whether all the image data included in the multimedia information file are three-dimensional image data or not.

It is noted that while the multimedia information file has been described, the present invention is not limited to the file. It should clearly be appreciated that the present intervention is applicable to transmission format of communication and broadcast for example or data format for other purposes.

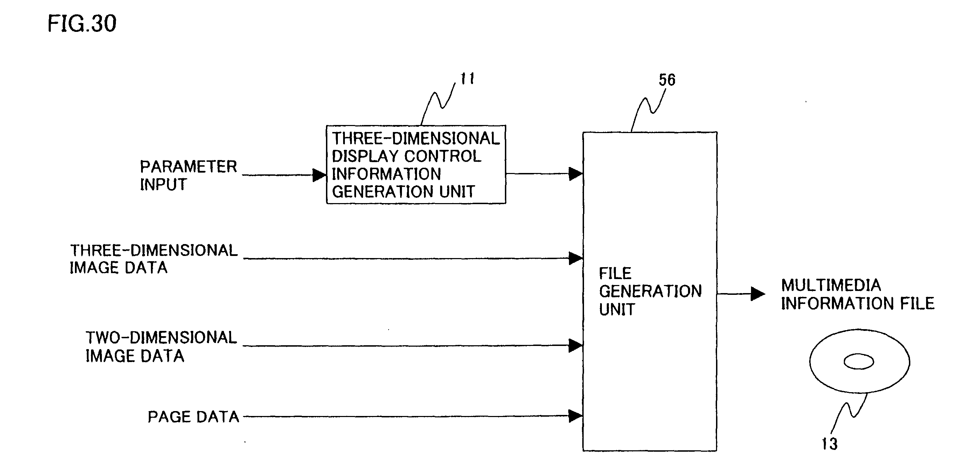

Fig. 30 is a block diagram showing another configuration of image data recording apparatus 100 that is another example of the multimedia information generation apparatus of the present invention. Specifically, Fig. 30 includes input of two-dimensional image data and input of page data in addition to the input to file generation unit 12 of image data recording apparatus 100 described in connection with Fig. 2. Since the configuration of three-dimensional display control information generation unit 11 is the same as that shown in Fig. 2, the description thereof is not provided here.

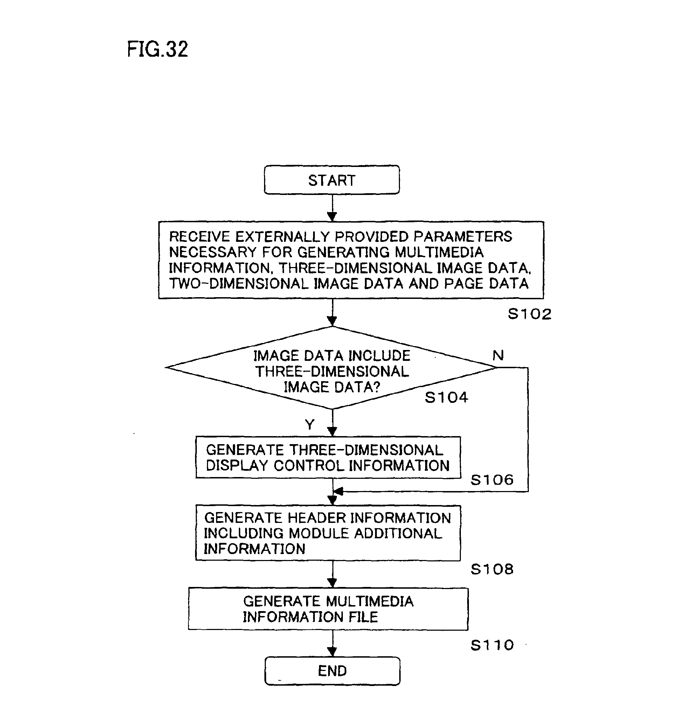

Fig. 32 is a flowchart illustrating the flow of operation of image data recording apparatus 100 shown in Fig. 30.

Referring to Figs. 30 and 32, image data recording apparatus 100 receives parameters necessary for generating multimedia information, three-dimensional image data, two-dimensional image data and page data that are externally provided (step S102). When the externally provided image data includes three-dimensional image data (step S104), three-dimensional display control information generation unit 11 generates three-dimensional control information (step S106). File generation unit 12 receives the three-dimensional display control information, three-dimensional image data, two-dimensional image data and page data to generate header information including the above-described module additional information (step S108), generate modules each including at least one of three-dimensional image data, two-dimensional image data and page data as shown in Figs. 23, 25, 26A, 26B and 31 and thereby generate and output the multimedia information file (step S110). It is noted that while three inputs, namely three-dimensional image data, two-dimensional image data and page data are provided here, the number of inputs may be one at the minimum. On the contrary, three or more inputs may be provided.

The multimedia information file is thus structured to allow the multimedia information in which both of two-dimensional image data and three-dimensional image data are included to efficiently be stored, transmitted and managed.

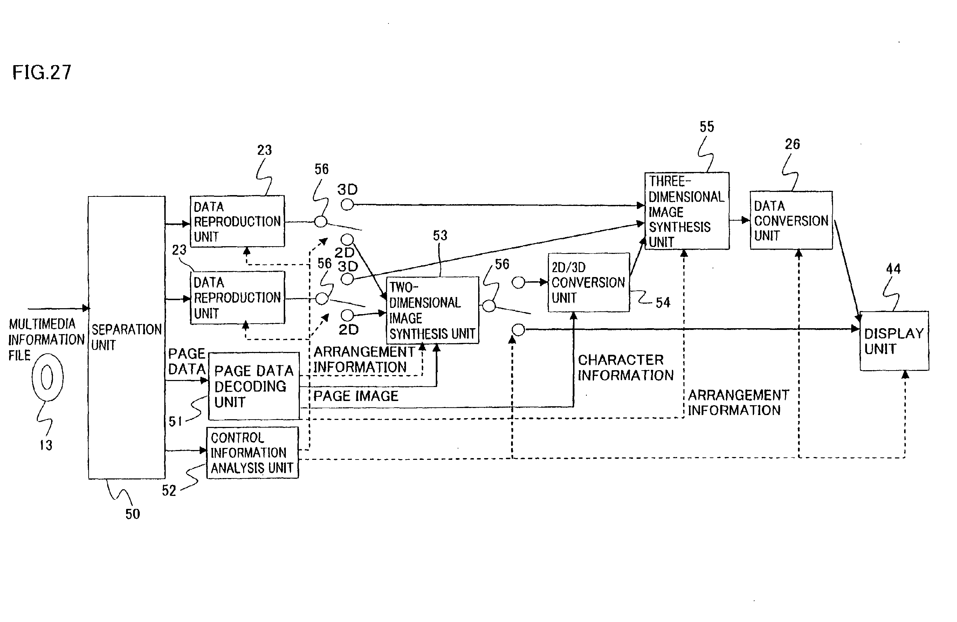

Fig. 27 is a schematic block diagram illustrating a configuration of an image data reproduction apparatus used in such an application where one multimedia information file as described above includes three-dimensional image data, two-dimensional image data and information about the arrangement thereof.

The image data reproduction apparatus shown in Fig. 27 includes a separation unit 50, a plurality of data reproduction units 23, a page data decoding unit 51, a control information analysis unit 52, switches 56, 57, a two-dimensional image synthesis unit 53, a three-dimensional image synthesis unit 55, a 2D/3D conversion unit 54, a data conversion unit 26 and a display unit 44. Since data conversion unit 26 and display unit 44 have already been described in connection with the image data reproduction apparatus shown in Fig. 17, the description thereof is not given here.

Separation unit 50 separates the input multimedia information file into header information provided to control information analysis unit 52, image data provided to data reproduction units 23, and page data provided to page data decoding unit 51.

Control information analysis unit 52 analyzes the header information to determine whether three-dimensional image display control information is included in each module additional information and turns switch 56 to 2D or 3D according to the result of the determination. Analysis unit 52 further inputs the three-dimensional image display control information to data reproduction units 23.

Data reproduction units 23 use, if the three-dimensional image display control information is input, any values included therein to reproduce the three-dimensional image. If not, data reproduction units 23 reproduce two-dimensional image.

Page data decoding unit 51 decodes the input page data to output a page image, analyzes information about arrangement of the image data, and outputs the result of the analysis to the two-dimensional image synthesis unit and the three-dimensional image synthesis unit. It is noted that since the page data is not requisite for the multimedia information file, page data decoding unit 51 may not be provided. In this case, the arrangement information included in the page data is separately defined.

Two-dimensional image synthesis unit 53 synthesizes the page image and the reproduced two-dimensional image based on the input arrangement information.

When the multimedia data information includes any three-dimensional image, switch 57 is turned to the 2D/3D conversion unit and display unit 44 provides three-dimensional display. When no three-dimensional image is included, switch 57 is turned to the display unit and display unit 44 provides two-dimensional display.

2D/3D conversion unit 54 generates three-dimensional image data from the synthesized two-dimensional image data. How to generate the three-dimensional image data is hereinlater described.

Three-dimensional image synthesis unit 55 performs synthesis of the three-dimensional image based on the input arrangement information.

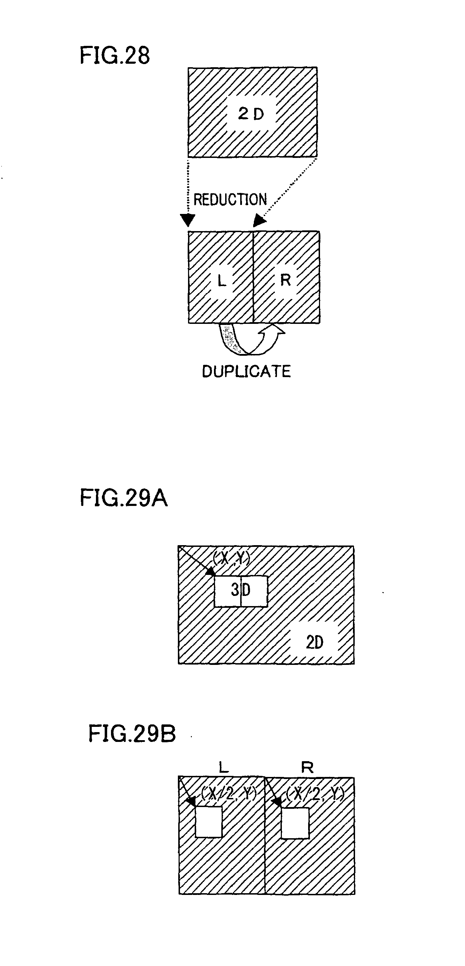

Fig. 28 is a conceptual illustration of operation of 2D/3D conversion unit 54. As shown in Fig. 28, the input two-dimensional image data is thinned so that the horizontal resolution is reduced by half. The thinned image is duplicated to generate two images. One of the images is right image and the other is left image. While the above description concerns the example in which the horizontal resolution is reduced by half, the resolution of three-dimensional image data necessary for display is different depending on a 3D display device of the image data reproduction apparatus. Therefore, the operation of the 2D/3D conversion unit is not limited to the above-described one. For example, according to the time-division scheme, data of odd-numbered lines is used to generate one of the images and data of even-numbered lines is used to generate the other image.

When the page data includes character information, page data decoding unit 51 reads a font image correlated with the character information from such a storage medium as ROM, develops the font image and pastes the resultant image to the page image. The font image may be bitmap data, vector data or other data.

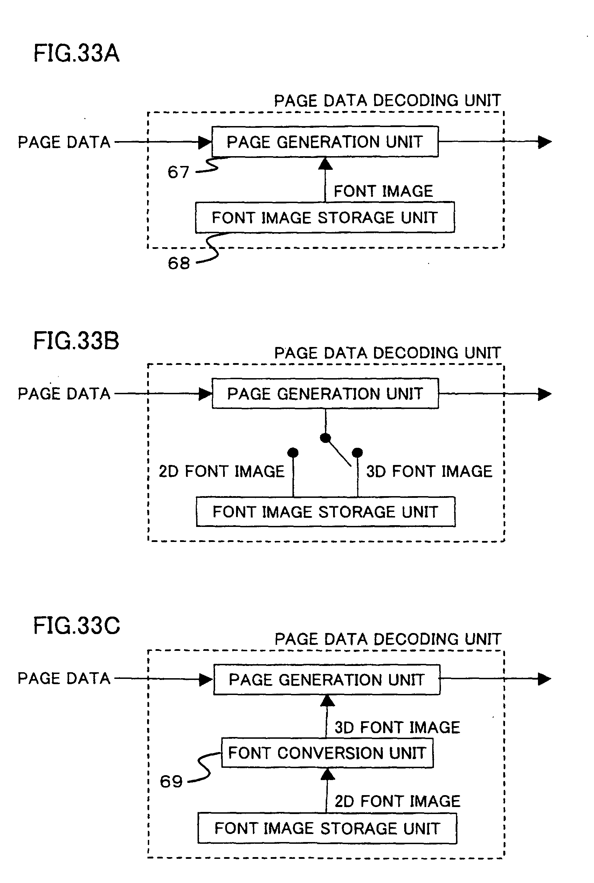

Fig. 33A is a detailed block diagram of page data decoding unit 51 in Fig. 27. Page data decoding unit 51 described above is comprised of a page generation unit 67 decoding the page data to generate the page image, and a font image storage unit 68 storing the font image. Page generation unit 67 decodes the page data input from separation unit 50 to generate the page image constituted of tables and lines for example, and reads the font image designated in the page data from font image storage unit 68 to develop and paste the read font image to the page image.

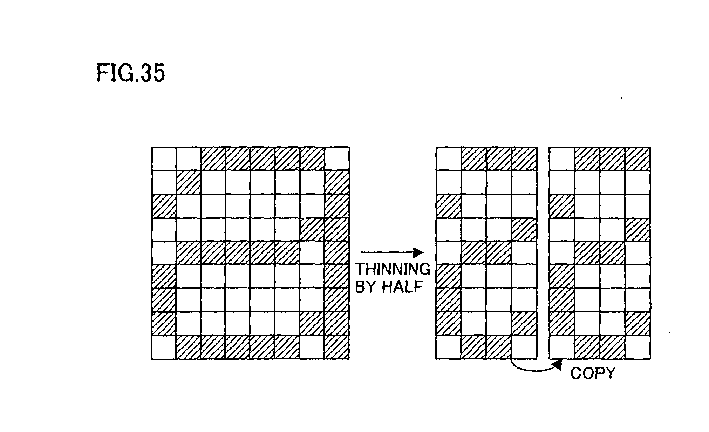

Fig. 35 conceptually shows how the font image read from font image storage unit 68 changes through page data decoding unit 51 and 2D/3D conversion unit 54. As discussed above, the 2D/3D conversion unit reduces the horizontal resolution of the input image data by half and duplicates the resultant image to generate a stereoscopic image.

Here, as shown in Fig. 35, character information of 2D page data input to 2D/3D conversion unit 54 could result in a character that cannot be identified as a character if thinning for reducing the horizontal resolution using only the odd-numbered columns causes a part of lines of the font to be lost. In order to avoid this situation, the font read from the font image storage unit has to be structured in such a manner that prevents the partial loss of the font even subjected to the thinning. Such a font image is hereinafter referred to as 3D font. The 3D font may be such a bold font as Gothic font that can be used as it is, only when the condition is satisfied that the font is not partially lost even subjected to thinning and thus the character of the font can be identified as a character. Alternatively, such a thin font as Roman font may specially be processed as described hereinlater to generate the 3D font.

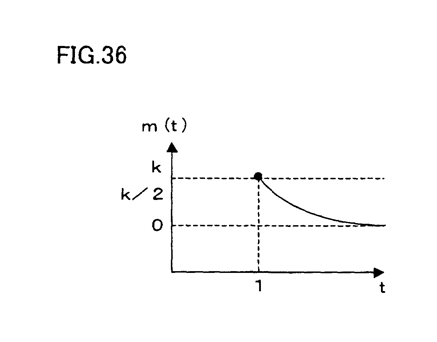

With reference to Figs. 36, 37A to 37C and 40, a method of generating the 3D font is described.

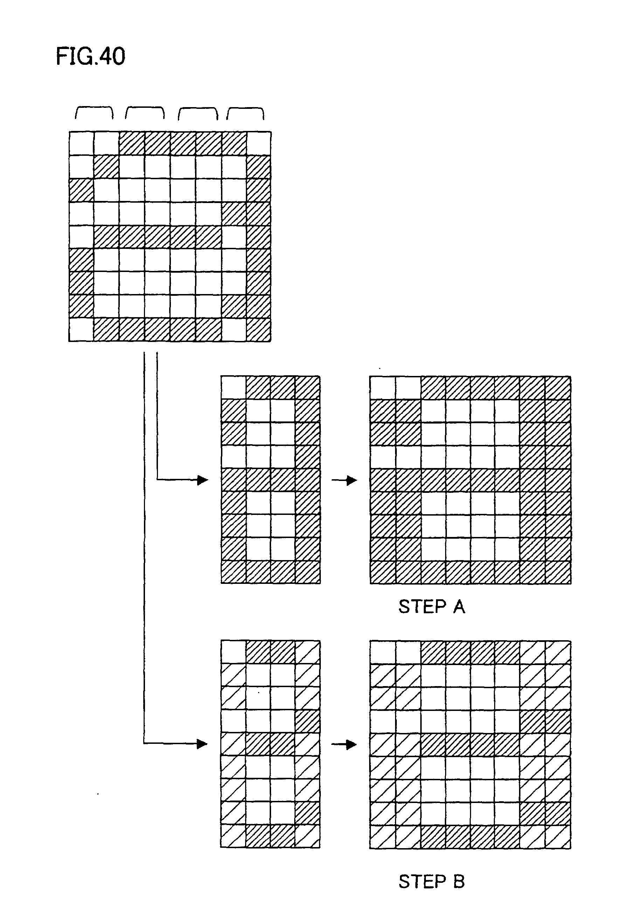

Fig. 40 conceptually shows a method of producing the 3D font. As shown, horizontal reduction by half may be done first and then horizontal expansion of each pixel may be repeated twice to generate the 3D font.

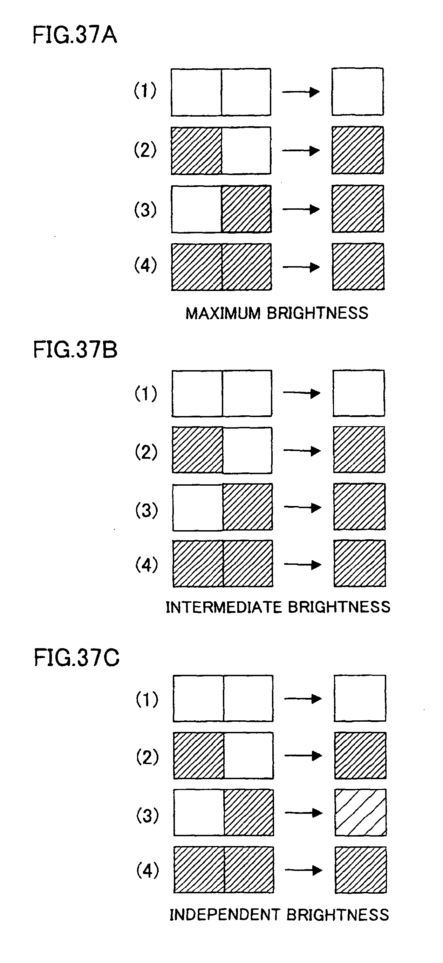

Figs. 37A to 37C show other methods of generating the 3D font. In Figs. 37A, 37B and 37C, other examples of the aforementioned reduction method are shown respectively. In these drawings, the white box represents a pixel of value zero, the black box represents a pixel of value k that is any value except for zero, and the gray box represents a pixel of value m that is any value except for zero and less than k. Further, (1) to (2) in the drawings concerning respective reduction methods indicate a relation between a combination of respective values of two pixels horizontally adjacent to each other and a pixel value resulting from the reduction process performed on these pixels.

According to the reduction method shown in Fig. 37A, on the condition that at least one of the two pixels is k, the pixel after reduction is k. Step A in Fig. 40 represents an example of the font after reduction and expansion according to this method. With this method, any of all pixels constituting a character does not disappear. Therefore, when one of an odd-numbered column and an even-numbered column is deleted in thinning, the other is surely left. Accordingly, even after 2D to 3D conversion, it can be avoided that a part of a character is lost.

According to the reduction method shown in Fig. 37B, the pixel value after the reduction is an intermediate value of respective values of the pixels adjacent to each other. In state (1), both of two pixels adjacent to each other have value zero and thus the pixel value after reduction is zero. In state (2) or (3) in which one of two pixels adjacent to each other has value zero and the other has value k, the pixel value after reduction is intermediate value m of zero and k. In state (4) in which both of two pixels adjacent to each other have value k, the pixel value after reduction is k. Since the value m is smaller than the value k, the apparent font line can be thinned regardless of the font which is made bolder. For example, when value k is 100, the value of m may be k/2 which is 50. Step B in Fig. 40 represents an example of the font after reduction and expansion according to this method. When the thickness is 1 and m is equal to 2/k and the resultant font is too dark, the thickness of each font image may be defined as t and a function may be used that allows value m to approach k on the condition that the thickness is close to 1 namely t is close to t as shown in Fig. 36.

The reduction method shown in Fig. 37C is identical in conversion regarding states (1) and (4) to the reduction method shown in Fig. 37B. According to the method in Fig. 37C, in state (2) in which only the left one of the two pixels has value k, the pixel value after reduction is m. Further, in state (3) in which only the right one of the two pixels has value k, the pixel value after reduction is n where n is a value different from value m and between zero and k. Accordingly, the apparent font image can more finely be controlled as compared with the method shown in Fig. 37B.

While the 3D font that is generated from the 2D font by the above-described methods or a 3D font newly generated and then stored in font image storage unit 68 in Fig. 33B may be selected and read when 3D display is provided, the font may be converted when the font image is read.

Fig. 33C is a block diagram showing a detailed configuration of the page data decoding unit used for the application where the font is converted when the font image is read. The page data decoding unit includes a font conversoin unit 69 in addition to the components of the page data decoding unit shown in Fig. 33B.

A page generation unit converts, when page data is decoded, the font image for 2D display which is read from a font image storage unit into the 3D font by font conversion unit 69 to generate a page image using the font. With this configuration, an advantage is achieved that the storage area can be reduced even in a case where an apparatus capable of providing both of the 2D and 3D display is used, since it is unnecessary to separately store respective font images for 2D and 3D.

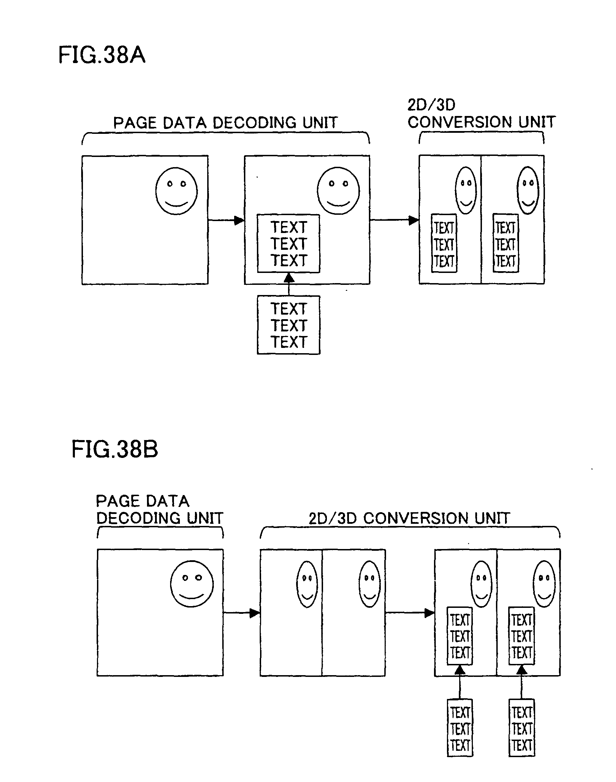

While decoding and developing of character information are done by page data decoding unit 51 in Fig. 27 as shown in Fig. 3 8A in the above-described embodiments, character information may be developed by 2D/3D conversion unit 54 instead of page data decoding unit 51 as shown in Fig. 38B. The configurations of page data decoding unit 51 and 2D/3D conversion unit 54 differ from those of the aforementioned embodiments. Here, page data decoding unit 51 in Figs. 33A to 33C is comprised of page generation unit 67 only (not shown).

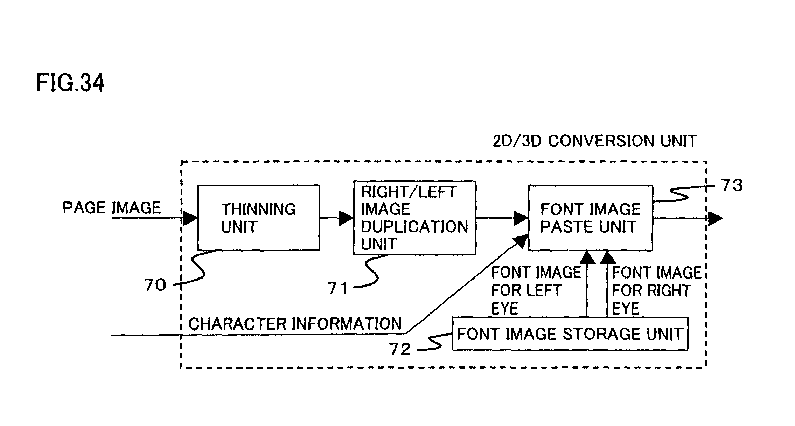

The 2D/3D conversion unit in Fig. 34 includes a thinning unit 70 horizontally reducing an input page image, a right/left image duplication unit 71 generating, from the reduced page image, right and left images necessary for producing stereoscopic display, a font image storage unit 72 storing font images used in generating the right and left images, and a font image paste unit 73 pasting the font image.

Since the operation of thinning unit 70 has already been described in detail in connection with the operation of the 2D/3D conversion unit, the description is not given here.

The right/left image duplication unit duplicates the thinned page image to generate the right and left images, decodes input character information, and reads and pastes respective font images for right and left eyes from font image storage unit 72. It is noted that the read font images have been thinned by the same method as that used by thinning unit 70 described above.

Respective font images for right and left eyes are pasted respectively to the right and left images so that the amount of parallax of the right and left fonts can delicately be changed. Then, pop-up of characters on a 3D display device can be controlled.

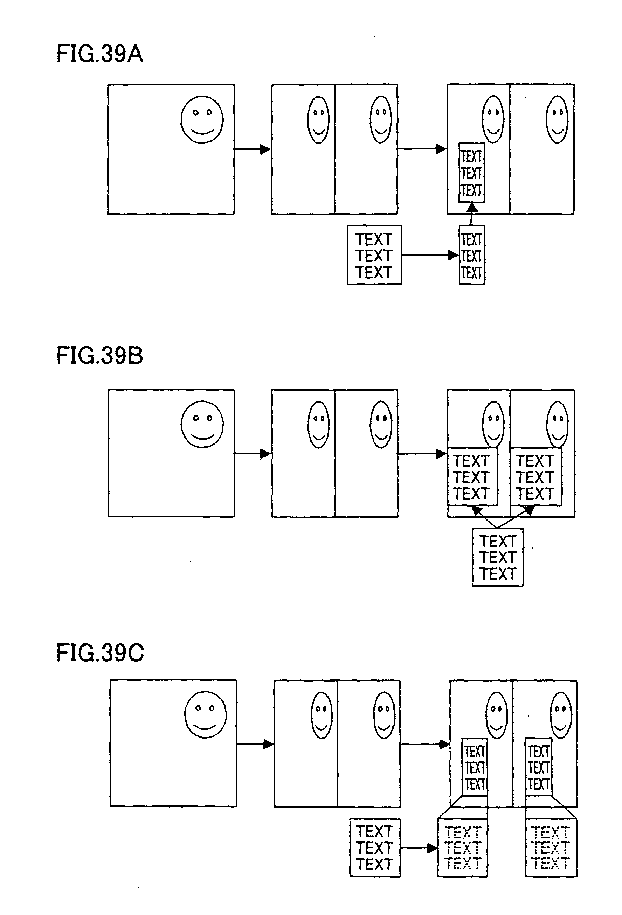

Figs. 39A to 39C are conceptual illustrations of further embodiments in which the font is developed by the 2D/3D conversoin unit.

Fig. 39A shows an embodiment in which only one of the font image for right eye and the font image for left eye is pasted to the right image and the left image. This embodiment provides an advantage that excessively high brightness can be avoided since only one of the right and left images has character information.

Further, as shown in Fig. 39B, a font image that has not been thinned may be pasted to each of the right image and the left image or one of them. In this case, although the character size is twice in the 3D display of the font image, advantages are obtained that any thin font can be used as it is since no reduction is done and that no process regarding the reduction is necessary.

Moreover, as shown in Fig 39C, pixel values of the read character information may be collected for each of the even-numbered columns and the odd-numbered columns to produce a font reduced horizontally by half, and the obtained font may be pasted to each of right and left images copied by the 2D/3D conversion unit. With this method, no information is lost in the thinning and the brightness can be kept. In this case, for example, data of only the even-numbered columns of the font image may be pasted to the left image and data of only the odd-numbered columns of the font image may be pasted to the right image.

In addition, respective font images for right and left eyes may be identical to each other. Here, the font image to be pasted may be the one that has been halved horizontally and stored in the font storage unit. The storage capacity can thus be reduced. Further, the binocular parallax can be adjusted to control pop-up of the font image.

Figs. 29A and 29B are conceptual illustrations of the way in which the arrangement information is used when three-dimensional image data is synthesized.

As shown in Fig. 29A, when the arrangement information of the three-dimensional image data is designated as (X, Y), three-dimensional image synthesis unit 55 may synthesize the image so that each of the right and left images are arranged at position (X/2, Y) as shown in Fig. 29B. This coordinate conversion method is provided here by way of illustration only since the method varies depending on the three-dimensional (3D) device of the image data reproduction apparatus, as described in connection with the above-described examples.

Further, when display unit 44 can provide a desired portion of a display region in the two-dimensional display mode, 2D/3D conversion unit 54 is unnecessary. In this case, two-dimensional image data may directly be input to the portion of the display unit that is in the two-dimensional display mode.

The image data reproduction apparatus can be configured as described above to appropriately display a multimedia information file including both of two-dimensional and three-dimensional images.

As discussed above, according to the present invention, even when a plurality of two-dimensional image data and three-dimensional image data are included in one multimedia information file, three-dimensional image display control information for displaying the three-dimensional image data is recorded or structured in the multimedia information file together with the three-dimensional image data, so that the three-dimensional image data in this one type of multimedia information file has versatility to be adapted flexibly to any of various three-dimensional display schemes.

With the multimedia information reproduction apparatus of the present invention, even when one multimedia information file includes a plurality of two-dimensional image data and three-dimensional image data, three-dimensional image display control information included in the multimedia information file can be analyzed to appropriately convert the three-dimensional image data and the two-dimensional image data according to any display method, thereby correctly displaying the image data.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A multimedia information generation method for generating multimedia information including a plurality of two-dimensional images and/or three-dimensional images, comprising the steps of:
generating control information for controlling display of said three-dimensional images when said multimedia information includes three-dimensional image data; and
generating said multimedia information including said two-dimensional images and/or three-dimensional images and said control information.

2. A multimedia information generation method for generating multimedia information comprised of a plurality of modules, **characterized in that**
said method comprises the step of generating said modules including a plurality of two-dimensional images and/or three-dimensional images, and
said modules include control information for controlling display of said three-dimensional images when said modules include three-dimensional image data.

3. The multimedia information generation method according to claim 1 or 2, **characterized in that** said control information is provided correspondingly to each three-dimensional image.

4. The multimedia information generation method according to claim 1 or 2, **characterized in that** said control information is provided correspondingly to a plurality of three-dimensional images.

5. The multimedia information generation method according to claim 1, **characterized in that** an identifier for identifying each of at least said two-dimensional images and/or said three-dimensional images is set in advance, and said control information includes identification information indicating said identifier of the three-dimensional image.

6. The multimedia information generation method according to claim 2, **characterized in that** an identifier for identifying each of at least said two-dimensional images and/or said three-dimensional images is set in advance, and said control information includes identification information indicating said identifier of the three-dimensional image.

7. The multimedia information generation method according to claim 5 or 6, **characterized in that** said control information includes a plurality of identifiers.

8. The multimedia information generation method according to claim 5 or 6, wherein a predetermined value of said identifier indicates that all of images included in said multimedia information are three-dimensional images.

9. The multimedia information generation method according to claim 5, wherein a predetermined value of said identifier indicates that all of images included in said modules are three-dimensional images.

10. A multimedia information reproduction apparatus reproducing multimedia information including a plurality of two-dimensional images or three-dimensional images, **characterized in that** said apparatus comprises:
a generation unit generating a three-dimensional image from said two-dimensional images; and
a first synthesis unit synthesizing said three-dimensional image generated by said generation unit and the three-dimensional images included in said multimedia information.

11. The multimedia information reproduction apparatus according to claim 10, **characterized in that** said apparatus further comprises a second synthesis unit synthesizing a plurality of two-dimensional images, and
said generation unit generates three-dimensional image data from two-dimensional image data obtained through synthesis by said second synthesis unit.

12. A multimedia information reproduction apparatus reproducing multimedia information including a plurality of two-dimensional images and/or three-dimensional images, comprising:
a page data decoding unit decoding graphic and character information included in said multimedia information to obtain a page image;
a 2D/3D conversion unit converting said page image into a three-dimensional image; and
a first synthesis unit synthesizing the three-dimensional image generated by said 2D/3D conversion unit and the three-dimensional images included in said multimedia information.

13. The multimedia information reproduction apparatus according to claim 12, **characterized in that** said apparatus further comprises a second synthesis unit synthesizing a plurality of two-dimensional images, and
said 2D/3D conversion unit converts two-dimensional image data obtained through synthesis by said second synthesis unit into three-dimensional image data.

14. The multimedia information reproduction apparatus according to claim 12 or 13, **characterized in that** a first font image and a second font image corresponding to the character information are provided, said first font image is used when the character information is three-dimensionally displayed and said second font image is used when the character information is two-dimensionally displayed.

15. The multimedia information reproduction apparatus according to claim 14, **characterized in that** said page data decoding unit uses said first or second font image to obtain the page image.

16. The multimedia information reproduction apparatus according to claim 14, **characterized in that** said 2D/3D conversion unit uses said first or second font image to obtain the three-dimensional image.

17. The multimedia information reproduction apparatus according to claim 15 or 16, **characterized in that** said apparatus further comprises:
a font image storage unit storing said first font image and said second font image; and
a switch selecting said first font image or said second font image.

18. The multimedia information reproduction apparatus according to claim 15 or 16, **characterized in that** said apparatus further comprises a font conversion unit converting the second font image into the first font image.

19. The multimedia information reproduction apparatus according to claim 12, **characterized in that** said first font image is comprised of a plurality of pieces of light/dark information and arranged so that apparent character thickness is thin.

## Amended claims

### Amended claims under Art. 19.1 PCT

**1.** (amended) A multimedia information generation apparatus for generating multimedia information including at least one two-dimensional image or character information and at least one three-dimensional image, comprising:
a control information generation unit generating control information for controlling display of said three-dimensional image; and
a multimedia information generation unit generating said multimedia information including said at least one two-dimensional image or character information and at least one three-dimensional image and said control information, wherein
said at least one two-dimensional image or character information and at least one three-dimensional image are data to be synthesized.

**2.** (amended) A multimedia information generation apparatus for generating multimedia information comprised of a plurality of modules, comprising
a module generation unit generating said modules including at least one two-dimensional image or character information and at least one three-dimensional image, wherein
said modules include control information for controlling display of said three-dimensional image, and said at least one two-dimensional image or character information and at least one three-dimensional image are data to be synthesized.

**3.** (amended) The multimedia information generation apparatus according to claim 1 or 2, wherein said control information is provided correspondingly to each three-dimensional image.

**4.** (amended) The multimedia information generation apparatus according to claim 1 or 2, wherein said control information is provided correspondingly to a plurality of three-dimensional images.

**5.** (amended) The multimedia information generation method according to claim 1, wherein an identifier for identifying each of at least said two dimensional image and said three-dimensional image is set in advance, and said control information includes said identifier of the three-dimensional image.

**6.** (amended) The multimedia information generation apparatus according to claim 2, wherein an identifier for identifying each of at least said two-dimensional image and said three-dimensional image is set in advance, and said control information includes said identifier of the three-dimensional image.

**7.** (amended) The multimedia information generation apparatus according to claim 5 or 6, wherein said control information includes a plurality of identifiers.

**8.** (amended) The multimedia information generation apparatus according to claim 5 or 6, wherein a predetermined value of said identifier indicates that all of images included in said multimedia information are three-dimensional images.

**9.** (amended) The multimedia information generation apparatus according to claim 5, wherein a predetermined value of said identifier indicates that all of images included in said modules are three-dimensional images.

**10.** (amended) A multimedia information reproduction apparatus reproducing multimedia information including at least one two-dimensional image or character information and at least one three-dimensional images, comprising:
a generation unit generating a three-dimensional image from said two-dimensional image or character information; and
a first synthesis unit synthesizing said three-dimensional image generated by said generation unit and the three-dimensional image included in said multimedia information.

**11.** (amended) The multimedia information reproduction apparatus according to claim 10, further comprising a second synthesis unit synthesizing a plurality of two-dimensional images or character information, and
said generation unit generates three-dimensional image data from two-dimensional image data obtained through synthesis by said second synthesis unit, instead of said two-dimensional images or character information.

**12.** (amended) A multimedia information reproduction apparatus reproducing multimedia information including a plurality of sets of at least one two-dimensional image or character information and at least one three-dimensional image, comprising:
a page data decoding unit decoding graphic and character information included in said multimedia information to obtain a page image;
a 2D/3D conversion unit converting said page image into a three-dimensional image; and
a first synthesis unit synthesizing the three-dimensional image generated by said 2D/3D conversion unit and the three-dimensional image included in said multimedia information.

**13.** (amended) The multimedia information reproduction apparatus according to claim 12, further comprising a second synthesis unit synthesizing a plurality of two-dimensional images, and
said 2D/3D conversion unit converts two-dimensional image data obtained through synthesis by said second synthesis unit into three-dimensional image data.

**14.** (amended) The multimedia information reproduction apparatus according to claim 12 or 13, wherein a first font image and a second font image corresponding to the character information are provided, said first font image is used when the character information is three-dimensionally displayed and said second font image is used when the character information is two-dimensionally displayed.

**15.** (amended) The multimedia information reproduction apparatus according to claim 14, wherein said page data decoding unit uses said first or second font image to obtain the page image.

**16.** (amended) The multimedia information reproduction apparatus according to claim 14, wherein said 2D/3D conversion unit uses said first or second font image to obtain the three-dimensional image.

**17.** (amended) The multimedia information reproduction apparatus according to claim 15 or 16, further comprising:
a font image storage unit storing said first font image and said second font image; and
a switch selecting said first font image or said second font image.

**18.** (amended) The multimedia information reproduction apparatus according to claim 15 or 16, further comprising a font conversion unit converting the second font image into the first font image.

**19.** (amended) The multimedia information reproduction apparatus according to claim 14, wherein said first font image is comprised of a plurality of pieces of light/dark information and arranged so that apparent character thickness is thin.
